(19) Europäisches Patentamt
European Patent Office
Office européen des brevets

(11) **EP 4 611 286 A1**

(12) **EUROPEAN PATENT APPLICATION**
published in accordance with Art. 153(4) EPC

(43) Date of publication:
**03.09.2025 Bulletin 2025/36**

(21) Application number: 23883196.0

(22) Date of filing: 30.10.2023

(51) International Patent Classification (IPC):
**H04L 1/00** (2006.01)     **H04L 5/00** (2006.01)
**H04W 74/08** (2024.01)     **H04W 4/40** (2018.01)

(52) Cooperative Patent Classification (CPC):
**H04L 1/00; H04L 5/00; H04W 4/40; H04W 74/08**

(86) International application number:
**PCT/KR2023/017002**

(87) International publication number:
**WO 2024/091092 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 28.10.2022 KR 20220140995

(71) Applicant: **Innovative Technology Lab Co., Ltd.**
**Seocho-gu, Seoul 06744 (KR)**

(72) Inventors:
• **PARK, Dong Hyun**
  **Seoul 06744 (KR)**
• **LEE, Won Seok**
  **Seoul 06744 (KR)**

(74) Representative: **Diehl & Partner**
**Patent- und Rechtsanwaltskanzlei mbB**
**Erika-Mann-Straße 9**
**80636 München (DE)**

(54) **METHOD AND DEVICE FOR PERFORMING SIDELINK COMMUNICATION ON UNLICENSED BAND**

(57)     A wireless UE that operates in a sidelink unlicensed band in a wireless communication system may include at least one antenna configured to transmit and receive one or more wireless signals, at least one processor, and a memory configured to store instructions for the wireless UE when executed by the at least one processor, and the operation of the wireless UE may include determining the number of OFDM symbols available for PSSCH transmission; determining the number of coded symbols of 2nd SCI based on the number of OFDM symbols available for PSSCH transmission; determining the number of resource elements of 2nd SCI based on the number of coded symbols of 2nd SCI; and mapping the 2nd SCI to radio resources based on a parameter related to a starting OFDM symbol location and a parameter related to the number of OFDM symbols and transmitting the same to another wireless UE.

**FIG. 20**

**Description**

TECHNICAL FIELD

The present disclosure relates to a rate matching method and apparatus for data channel transmission and reception in the sidelink unlicensed band (SL-U) in a wireless communication system.

RELATED ART

The International Mobile Telecommunication (IMT) framework and standard have been developed by the International Telecommunication Union (ITU). Also, a continuous discussion about 5-th generation (5G) communication is ongoing through a program called "IMT for 2020 and beyond."

To satisfy the requirements requested by "IMT for 2020 and beyond," various proposals have been made to support various numerologies about a time-frequency resource unit standard by considering various scenarios, service requirements, and potential system compatibility in a 3-rd Generation Partnership Project (3GPP) new radio (NR) system.

Also, in a new communication system, discussions are ongoing on a method of supporting uninterrupted communication services at a service level for a user equipment (UE) with mobility (e.g., vehicle/train/ship type UE/personal smartphone) using not only terrestrial networks (TN) but also non-terrestrial networks (NTN).

DETAILED DESCRIPTION

TECHNICAL SUBJECT

The present disclosure relates to a rate matching method and apparatus for data channel transmission and reception in the sidelink unlicensed band (SL-U) in a wireless communication system.

The present disclosure relates to a rate matching method and apparatus for $2^{nd}$ sidelink control information (SCI) assignment in the SL-U.

The present disclosure relates to a method and apparatus for determining the number of coded symbols for $2^{nd}$ SCI in the SL-U.

The present disclosure relates to a rate matching method and apparatus for $2^{nd}$ SCI assignment based on a slot in which a physical sidelink feedback channel (PSFCH) is present in the SL-U.

TECHNICAL SOLUTION

According to an example, a wireless user equipment (UE) that operates in a sidelink unlicensed band in a wireless communication system, the wireless UE including at least one antenna configured to transmit and receive one or more wireless signals; at least one processor; and a memory configured to store instructions for the wireless UE when executed by the at least one process, wherein the operation of the wireless UE includes determining the number of orthogonal frequency division multiplexing (OFDM) symbols available for physical sidelink shared channel (PSSCH) transmission; determining the number of coded symbols of $2^{nd}$ sidelink control information (SCI) based on the number of OFDM symbols available for the PSSCH transmission; determining the number of resource elements (REs) of the $2^{nd}$ SCI based on the number of coded symbols of the $2^{nd}$ SCI; and mapping the $2^{nd}$ SCI to radio resources based on a parameter related to a starting OFDM symbol location and a parameter related to the number of OFDM symbols and transmitting the mapped $2^{nd}$ SCI to another wireless UE.

Also, according to an example, the number of OFDM symbols available for the PSSCH transmission may be determined as a value acquired by excluding a gap symbol from a sidelink length symbol (SL-lengthSymbols) value, and the sidelink length symbol value may be determined based on at least one of a higher layer parameter and SCI signaling.

Also, according to an example, the gap symbol may be determined based on at least one of the higher layer parameter and the SCI signaling.

Also, according to an example, the gap symbol may be implicitly determined based on the number of OFDM symbols and the starting OFDM symbol location determined based on a listen to talk (LBT) success point in time of the wireless UE.

Also, according to an example, the number of coded symbols of the $2^{nd}$ SCI may be determined by further reflecting the number of physical sidelink feedback channel (PSFCH) symbols to the number of OFDM symbols available for the PSSCH transmission.

Also, according to an example, the number of PSFCH symbols may be determined as a specific value based on a PSFCH overhead indication field within the SCI, if the PSFCH overhead indication field within the SCI indicates presence of a PSFCH, the number of PSFCH symbols may be determined as a first value, and if the PSFCH overhead indication field within the SCI indicates absence of the PSFCH, the number of PSFCH symbols may be determined as 0.

Also, according to an example, the number of resource elements of the 2nd SCI may be determined based on the number of subcarriers related to the PSSCH transmission and the number of subcarriers on an OFDM symbol to which PSCCH demodulation reference signals (DMRS) related to a physical sidelink control channel (PSCCH) and the PSSCH are assigned.

Also, according to an example, when a sidelink-synchronization signal block (SL-SSB) is multiplexed in the PSSCH/PSCCH based on the sidelink unlicensed band, the number of resource elements of the 2nd SCI may be determined further based on the number of SL-SSB resource elements.

EFFECT

According to the present disclosure, it is possible to provide a rate matching method for data channel transmission and reception in the sidelink unlicensed band (SL-U) in a wireless communication system.

According to the present disclosure, it is possible to provide a rate matching method for 2nd sidelink control information (SCI) assignment in the SL-U.

According to the present disclosure, it is possible to provide a method of determining the number of coded symbols for 2nd SCI in the SL-U.

According to the present disclosure, it is possible to provide a rate matching method for 2nd SCI assignment based on a slot in which a physical sidelink feedback channel (PSFCH) is present in the SL-U.

The present disclosure is not limited to the aforementioned effects and still other effects not described may be clearly understood by one of ordinary skill in the art to which the present disclosure pertains from the following description.

BRIEF DESCRIPTION OF DRAWINGS

FIG. 1 illustrates an example of describing a new radio (NR) frame structure to which the present disclosure may apply.
FIG. 2 illustrates an NR resource structure to which the present disclosure may apply.
FIG. 3 illustrates an NR sidelink slot structure to which the present disclosure may apply.
FIG. 4 illustrates an NR sidelink frequency to which the present disclosure may apply.
FIG. 5 illustrates an NR sidelink resource pool configuration to which the present disclosure may apply.
FIG. 6 illustrates an unlicensed band for each region for NR sidelink communication to which the present disclosure may apply.
FIG. 7 illustrates use of a 5 gigahertz (GHz) unlicensed band to which the present disclosure may apply.
FIG. 8 illustrates a method of increasing a bandwidth in consideration of a power spectral density (PSD) limitation to which the present disclosure may apply.
FIG. 9 illustrates a method of configuring a guard band in consideration of a shared band within an intra-cell to which the present disclosure may apply.
FIG. 10 illustrates an interlace-based resource block (RB) resource assignment method to which the present disclosure may apply.
FIG. 11 illustrates a method of performing a listen before talk (LBT) procedure in an unlicensed band to which the present disclosure may apply.
FIG. 12 illustrates a channel occupancy time (COT) sharing and discovery burst transmission to which the present disclosure may apply.
FIG. 13 illustrates a method of applying cyclic prefix (CP) extension to uplink when performing COT sharing between downlink and uplink to which the present disclosure may apply.
FIG. 14 illustrates a semi-static channel access procedure to which the present disclosure may apply.
FIG. 15 illustrates a method of performing channel occupancy to which the present disclosure may apply.
FIG. 16 illustrates a method of configuring a bandwidth part (BWP) in a sidelink unlicensed band and a resource block set (RBS) in a resource pool to which the present disclosure may apply.
FIG. 17 illustrates a method of configuring a sidelink unlicensed band resource pool to which the present disclosure may apply.
FIG. 18 illustrates a frequency resource-based sidelink unlicensed band resource pool configuration using interlace assignment to which the present disclosure may apply.
FIG. 19 illustrates a sidelink unlicensed band resource pool configuration method to which the present disclosure may apply.
FIG. 20 illustrates a method of configuring a plurality of start symbols and symbol lengths for physical sidelink control channel (PSCCH) and physical sidelink shared channel (PSSCH) transmission to which the present disclosure may apply.

FIG. 21 illustrates a rate matching method based on an automatic gain control (AGC)/gap symbol presence status indication to which the present disclosure may apply.

FIG. 22 illustrates a method of transmitting sidelink data based on listen before talk (LBT) success in the middle of a slot to which the present disclosure may apply.

FIG. 23 illustrates an SL non-slot-based physical sidelink feedback channel (PSFCH) transmission method in SL-U to which the present disclosure may apply.

FIG. 24 illustrates a method of scheduling a plurality of transmission time intervals (TTIs) through one SCI signaling to which the present disclosure may apply.

FIG. 25 illustrates a method of applying multiplexing between an SL SSB and a PSSCH/PSCCH to which the present disclosure may apply.

FIG. 26 illustrates a case in which an additional SL-SSB occasion is configured within a resource pool to which the present disclosure may apply.

FIG. 27 illustrates a method of performing non-slot-based sidelink transmission that includes 2nd SCI after LBT success to which the present disclosure may apply.

FIG. 28 illustrates a method of performing non-slot and slot-based sidelink transmission that includes 2nd SCI after LBT success to which the present disclosure may apply.

FIG. 29 is a flowchart illustrating an operation of a wireless UE in the sidelink unlicensed band to which the present disclosure may apply.

FIG. 30 is a diagram illustrating a base station device and a terminal device to which the present disclosure may apply.

## BEST MODE

Various examples of the present disclosure will be described more fully hereinafter with reference to the accompanying drawings such that one of ordinary skill in the art to which the present disclosure pertains may easily implement the examples. However, the present disclosure may be implemented in various forms and is not limited to the examples described herein.

In describing the examples of the present disclosure, a detailed description on known configurations or functions may be omitted for clarity and conciseness. Throughout the drawings and the detailed description, unless otherwise described, the same drawing reference numerals are understood to refer to the same elements, features, and structures.

It will be understood that when an element is referred to as being "connected to," "coupled to," or "accessed to" another element, it can be directly connected, coupled, or accessed to the other element or the intervening elements may be present. Also, it will be further understood that when an element is described to "comprise/include" or "have" another element, it specifies the presence of another element, but does not preclude the presence of another element uncles otherwise described.

Further, the terms, such as first, second, and the like, may be used herein to describe the elements in the description herein. These terms are used to distinguish one element from another element. Thus, the terms do not limit the element, an arrangement order, a sequence or the like. Therefore, a first element in an example may be referred to as a second element in another example. Likewise, a second element in an example may be referred to as a first element in another example.

Herein, distinguishing elements are merely provided to clearly explain the respective features and do not represent the elements as necessarily separate from each other. That is, a plurality of elements may be integrated into a single hardware or software unit. Also, a single element may be distributed to a plurality of hardware or software units. Therefore, unless particularly described, the integrated or distributed example is also included in the scope of the present disclosure.

Herein, the elements described in various examples may not be necessarily essential and may be partially selectable. Therefore, an example including a partial set of elements described in an example is also included in the scope of the present disclosure. Also, an example that additionally includes another element to the elements described in various examples is also included in the scope of the present disclosure.

The description described herein is related to a wireless communication network, and an operation performed in a wireless communication network may be performed in the process of controlling a network and transmitting data by a system that controls a wireless network, e.g., a base station, or may be performed in a user equipment

It is apparent that various operations performed for communication with a UE in a network including a base station and a plurality of network nodes may be performed by the base station or by other network nodes in addition to the base station. Here, the term 'base station (BS)' may be interchangeably used with other terms, for example, a fixed station, a Node B, an eNodeB (eNB), a gNodeB (gNB), and an access point (AP). Also, the term 'terminal' may be interchangeably used with other terms, for example, user equipment (UE), a mobile station (MS), a mobile subscriber station (MSS), a subscriber station (SS), and a non-AP station (non-AP STA).

Herein, transmitting or receiving a channel includes the meaning of transmitting or receiving information or a signal through the corresponding channel. For example, transmitting a control channel indicates transmitting control information or a signal through the control channel. Likewise, transmitting a data channel indicates transmitting data information or a signal through the data channel.

In the following description, although the term "new radio (NR) system" is used to distinguish a system according to various examples of the present disclosure from the existing system, the scope of the present disclosure is not limited thereto.

A new radio (NR) system supports various subcarrier spacings (SCSs) by considering various scenarios, service requirements, potential system compatibility, and the like. Also, to overcome a poor channel environment, such as high pathloss, phase-noise, and frequency offset, that occurs on a high carrier frequency, the NR system may support transmission of a physical signal/channel through a plurality of beams. Through this, the NR system may support applications, such as, enhanced Mobile Broadband (eMBB), massive Machine Type Communications (mMTC)/ultra Machine Type Communications (uMTC), and Ultra Reliable and Low Latency Communications (URLLC).

Here, the 5G mobile communication technology may be defined by including the existing Long Term Evolution-Advanced (LTE-A) system as well as the aforementioned NR system. That is, the 5G mobile communication technology may operate by considering the backward compatibility with a previous system as well as a newly defined NR system. Therefore, following the 5G mobile communication may include technology operating based on the NR system and a technology operating based on a previous system (e.g., LTE-A, LTE), but is not limited to a specific system.

First of all, the physical resource structure of the NR system to which the present disclosure is applied will be briefly described.

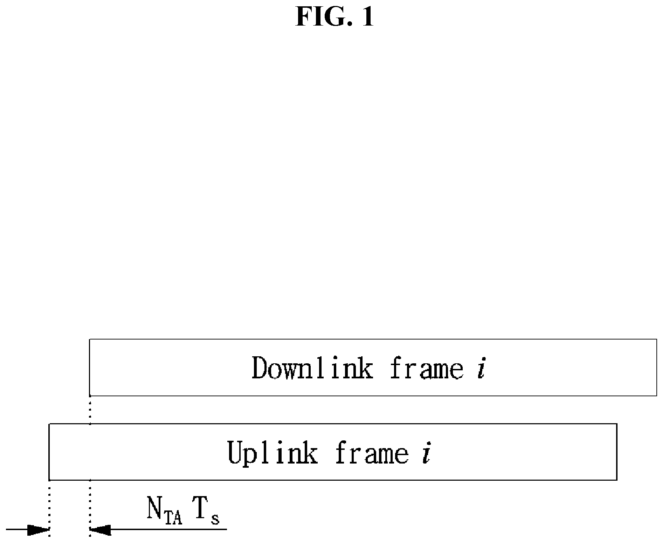

FIG. 1 illustrates an example of an NR frame structure according to an example of the present disclosure.

In the NR, a basic unit of a time domain may be $T_c = 1/(\Delta f_{max} \cdot N_f)$. Here, $\Delta f_{max} = 480 \cdot 10^3$ and $N_f = 4096$. Also, $\kappa = T_s/T_c = 64$ may be a constant in a multiple relationship between an NR time unit and an LTE time unit. In LTE, $T_s = 1/(\Delta f_{ref} \cdot N_{f, ref})$, $\Delta f_{ref} = 15 \cdot 10^3$ and $N_{f,ref} = 2048$ may be defined as a reference time unit. The constants for the multiple relationship between the NR time base unit and the LTE time base unit may be defined as k=Ts/Tc=64.

Referring to FIG. 1, a time structure of a frame for a downlink/uplink (DL/UL) transmission may include $T_f = (\Delta f_{max} N_f/100) \cdot T_s = 10ms$. Here, a single frame may include 10 subframes corresponding to $T_{sf} = (\Delta f_{m,ax} N_f/1000) \cdot T_s = 1ms$. A number of consecutive orthogonal frequency division multiplexing (OFDM) symbols per subframe may be

$$N_{symb}^{subframe,\mu} = N_{symb}^{slot} N_{slot}^{subframe,\mu}$$ . Also, each frame may be divided into two half frames and the half frames may include 0 to 4 subframes and 5 to 9 subframes. Here, the half frame 1 may include 0 to 4 subframes and the half frame 2 may include 5 to 9 subframes.

The NTA represents the timing advance (TA) between downlink (DL) and uplink (UL). Here, a transmission timing of the uplink transmission frame i is determined based on a downlink reception timing at a UE according to the following Equation 1.

[Equation 1]

$$T_{TA} = \left(N_{TA} + N_{TA,offset}\right)T_c$$

The $N_{TA,offset}$ denotes a TA offset value occurring due to a duplex mode difference and the like. Basically, in a frequency division duplex (FDD), $N_{TA,offset}$=0. In a time division duplex (TDD), $N_{TA,offset}$ may be defined as a fixed value by considering a margin for a DL-UL switching time. For example, in the TDD (Time Division Duplex) of RF1 (Frequency Range 1) which is a sub-6 GHz or less frequency, NTA,offset may be 39936TC or 2600TC. 39936TC=20.327$\mu$s and 25600TC=13.030$\mu$s. Also, in FR2 (Frequency Range 2) which is millimeter wave (mmWave), the NTA,offset may be 13792TC. At this time, 39936TC=7.020 $\mu$s.

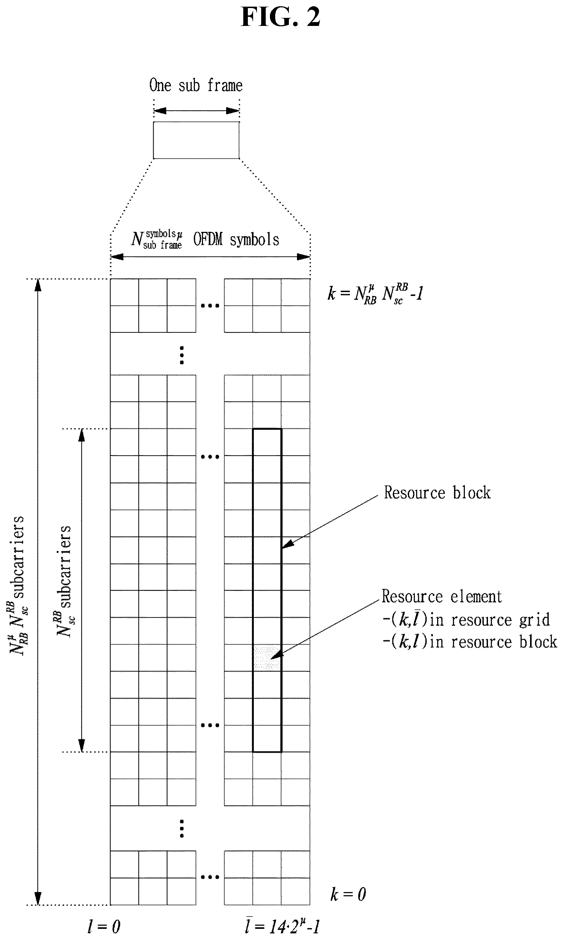

FIG.2 illustrates an NR resource structure to which the present disclosure may apply.

A resource element within a resource grid may be indexed based on each subcarrier spacing. Here, a single resource grid may be generated for each antenna port and for each subcarrier spacing. The uplink/downlink transmission and reception may be performed based on a corresponding resource grid.

A resource block (RB) on a frequency domain is configured of 12 REs and for every 12 Res, an index for one RB (nPRB) may be configured. The index for RB may be utilized within a specific frequency band or system bandwidth. The index for RB may be defined as shown in Equation 2 below. Here, the NRBsc represents the number of subcarriers per one RB and k represents the subcarrier index.

[Equation 2]

$$n_{PRB} = \left\lfloor \frac{k}{N_{sc}^{RB}} \right\rfloor$$

Numerologies may be variously configured to meet the various services and requirements of the NR system. For example, one subcarrier spacing (SCS) may be supported in the LTE/LTE-A system, but a plurality of SCS may also be supported in the NR system.

A new numerology for the NR system that supports the plurality of SCSs may operate in a frequency range or carrier, such as 3 GHz or less, 3 GHz-6 GHz, 6 GHZ-52.6 GHz, or 52.6 GHz or more, to solve the issue that a wide bandwidth is unavailable in a frequency range or carrier such as 700 MHz or 2 GHz

Table 1 below shows an example of the numerologies supported by the NR system.

[Table 1]

| $\mu$ | $\Delta f = 2^{\mu} \cdot 15[kHz]$ | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

Referring to the above Table 1, the numerologies may be defined based on an SCS, a cyclic prefix (CP) length, and a number of OFDM symbols per slot, which are used in an OFDM system. The aforementioned values may be provided to a UE through the higher layer parameters, DL-BWP-mu and DL-BWP-cp, for the downlink, and through the higher layer parameter, UL-BWP-mu and UL-BWP-cp, for the uplink.

In the above Table 1, if $\mu = 2$ and SCS = 60 kHz, a normal CP and an extended CP may be applied. In other bands, only the normal CP may be applied.

Here, a normal slot may be defined as a basic time unit used to transmit a single piece of data and control information in the NR system. A length of the normal slot may basically include 14 OFDM symbols. Also, dissimilar to a slot, a subframe may have an absolute time length corresponding to 1 ms in the NR system and may be used as a reference time for the length of another time section. Here, for the coexistence and backward compatibility of the LTE and the NR system, a time section, such as an LTE subframe, may be required for an NR standard.

For example, in the LTE, data may be transmitted based on a transmission time interval (TTI) that is a unit time. The TTI may include at least one subframe unit. Here, even in the LTE, a single subframe may be set to 1 ms and may include 14 OFDM symbols (or 12 OFDM symbols).

Also, in the NR system, a non-slot may be defined. The non-slot may refer to a slot having the number of symbols less by at least one symbol than that of the normal slot. For example, in the case of providing a low latency such as an Ultra-Reliable and Low Latency Communications (URLLC) service, the latency may decrease through the non-slot having the number of slots less than that of the normal slot. Here, the number of the OFDM symbols included in the non-slot may be determined based on a frequency range. For example, a non-slot with 1 OFDM symbol length may be considered in the frequency range of 6 GHz or more. As another example, the number of symbols used to define the non-slot may include at least two OFDM symbols. Here, the range of the number of OFDM symbols included in the non-slot may be configured with a length of a mini slot up to (normal slot length) -1. Here, although the number of OFDM symbols may be limited to 2, 4, or 7, as a non-slot standard, it is provided as an example only.

Also, for example, an SCS corresponding to $\mu = 1$ and 2 may be used in the unlicensed band of 6 GHz or less and an SCS corresponding to $\mu = 3$ and 4 may be used in the unlicensed band above 6 GHz. Here, for example, if $\mu = 4$, it may be used for a synchronization signal block (SSB).

[Table 2]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |

(continued)

| $\mu$ | $N_{symb}^{slot}$ | $N_{slot}^{frame,\mu}$ | $N_{slot}^{subframe,\mu}$ |
|---|---|---|---|
| 2 | 14 | 40 | 4 |
| 3 | 14 | 80 | 8 |
| 4 | 14 | 160 | 16 |

Table 2 shows a number of OFDM symbols per slot $\left(N_{symb}^{slot}\right)$, a number of slots per frame $\left(N_{slot}^{frame,\mu}\right)$, and a number of slots per subframe $N_{slot}^{subframe,\mu}$ ) for the normal CP by the subcarrier spacing setting. In Table 2, the values are based on the normal slot having 14 OFDM symbols.

[Table 3]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

In Table 3, in the case of the extended CP applied (that is, $\mu$ = 2 and SCS = 60 kHz), shows the number of slots per frame and the number of slots per subframe based on the normal slot for which the number of OFDM symbols per slot is 12.
As described above, a single subframe may correspond to 1 ms on a time axis. Also, a single slot may correspond to 14 symbols on the time axis. For example, a single slot may correspond to 7 symbols on the time axis. Therefore, the number of slots and the number of symbols that may be considered may be differently set within 10 ms corresponding to a single radio frame. Table 4 may show the number of slots and the number of symbols according to each SCS. Although the SCS of 480 kHz may not be considered in Table 4, the present disclosure is not limited to such examples.

[Table 4]

| SCS | slots in 10ms | slots in 10ms | symbols in 10 ms |
|---|---|---|---|
| 15 kHz | 10 | 20 | 140 |
| 30 kHz | 20 | 40 | 280 |
| 60 kHz | 40 | 80 | 560 |
| 120 kHz | 80 | N/A | 1120 |
| 240 kHz | 160 | N/A | 2240 |
| 480 kHz | 320 | N/A | 4480 |

The V2X service may support a set of basic requirements for V2X services. The requirements are designed basically in sufficient consideration of a road safety service. Here, V2X UE may exchange autonomous status information through a SL. Also, the V2X UE may exchange the information with infrastructure nodes and/or pedestrians.
The V2X service (e.g., LTE Rel-15) may support at least one of a carrier aggregation in a SL, a high order modulation, a latency reduction, a transmit (Tx) diversity, and a sTTI (Transmission Time Interval). For this purpose, new features may be applied to the V2X communication. More particularly, the V2X UE may operate in consideration of coexistence with other V2X UEs. For example, the V2X UE may use the same resource pool as other V2X UEs.
For example, the technical features may be classified largely based on four categories as represented by the following Table 5 by considering the use cases for supporting a V2X service as the system aspect (SA) 1, but are not limited thereto. In Table 5, the "Vehicles Platooning" may be the technology that enables a plurality of vehicles to dynamically form a group and similarly operate. The "Extended Sensors" may be the technology that enables an exchange of data gathered from sensors or video images. The "Advanced Driving" may be the technology that enables a vehicle to drive based on semi-automation or full-automation. The "Remote Driving" may be the technology for remotely controlling a vehicle and the technology for providing an application. Based thereon, further description related thereto may be given by the following Table 5.

[Table 5]

| |
|---|
| Vehicles Platooning<br>Vehicles Platooning enables the vehicles to dynamically form a platoon travelling together. All the vehicles in the platoon obtain information from the leading vehicle to manage this platoon. These information allow the vehicles to drive closer than normal in a coordinated manner, going to the same direction and travelling together. |
| Extended Sensor<br>Extended Sensor enables the exchange of raw or processed data gathered through local sensors or live video images among vehicles, road site units, devices of pedestrian and V2X application servers. The vehicles can increase the perception of their environment beyond of what their own sensors can detect and have a more broad and holistic view of the local situation. High data rate is one of the key characteristics. |
| Advanced Driving<br>Advanced Driving enables semi-automated or full-automated driving. Each vehicle and/or RSU shares its own perception data obtained from its local sensors with vehicles in proximity and that allows vehicles to synchronize and coordinate their trajectories or manoeuvres. Each vehicle shares its driving intention with vehicles in proximity too. |
| Remote Driving<br>Remote Driving enables a remote driver or a V2X application to operate a remote vehicle for those passengers who cannot drive by themselves or remote vehicles located in dangerous environments. For a case where variation is limited and routes are predictable, such as public transportation, driving based on cloud computing can be used. High reliability and low latency are the main requirements. |

Also, the SA1 may support the case of operating in various systems (e.g., LTE and NR) as enhanced V2X (eV2X) support technology for supporting the V2X service. For example, an NR V2X system may be a first V2X system. Also, an LTE V2X system may be a second V2X system. That is, the NR V2X system and the LTE V2X system may be different V2X systems.

The following describes a method for satisfying low latency and high reliability required in an NR SL based on the NR V2X system. However, the same or similar composition may be expanded and applied to the LTE V2X system, and is included but not limited to the following examples. That is, in the LTE V2X system, the present disclosure may apply to an interactable portion.

Here, NR V2X capability may not be limited to essentially supporting only V2X services and V2X RAT to be used may be selected.

Also, new service requirements for Public Safety and commercial use case for NR V2X services may be considered further in. For example, the use case may include, but is not limited to, at least one of more advanced V2X services, public safety services, the Network Controlled Interactive Service (NCIS), the Gap Analysis for Railways (MONASTERYEND), the Enhanced Relays for Energy Efficiency and Extensive Coverage (REFEC), and the Audio-Visual Service Production (AVPROD) certification.

A physical channel, a signal, a basic slot structure, and a physical resource may be configured for the NR V2X. Here, an NR Physical SL Shared Channel (NR PSSCH) may be a physical layer NR SL data channel. The V2X UEs may exchange data and control information (e.g., 2nd SCI, CSI) through the NR PSSCH. An NR Physical SL Control Channel (NR PSCCH) may be a physical layer NR SL control channel. The NR PSCCH refers to a channel for transmitting scheduling information of the NR SL data channel and control information (1st SL Control Information (SCI)) including 2nd SCI indication. That is, a V2X UE may transmit control information for SL data communication to another V2X UE through PSCCH. An NR Physical SL Feedback Channel (NR PSFCH) refers to a channel for transmitting physical layer NR Hybrid Automatic Repeat Request (HARQ) feedback information and a channel for transmitting HARQ-ACK feedback information corresponding to the NR SL data channel (i.e., PSSCH). The V2X UE may transmit data to another V2X UE and then may receive the HARQ feedback information of the corresponding data through NR PSFCH. An NR SL Synchronization Signal/Physical SL Broadcast Channel (SLSS/PSBCH) block refers to a channel block in which an NR SL synchronization signal and a broadcast channel are transmitted in a single consecutive time. Here, the SLSS/PSBCH block may be periodically transmitted based on a set of one or more block indexes to support beam-based transmission in an NR frequency band. The synchronization signal includes a Primary SL Synchronization Signal (PSSS) and a Secondary SL Synchronization Signal (SSSS). The synchronization signal is generated based on at least one SLSSID value. The NR Physical SL Broadcast Channel (PSBCH) refers to a channel for transmitting system information required to perform V2X SL communication. The NR PSBCH is transmitted with the SLSS and periodically transmitted based on a set of SLSS/PSBCH block indexes to support beam-based transmission.

Also, a PSCCH and PSSCH may be defined for supporting NR V2X. A UE may transmit SCI to another UE via PSCCH. Here, the Tx UE may transmit the first SCI (1st SCI, SCI format 1-A) to the Rx UE via PSCCH. The 1st SCI may be used for scheduling the PSSCH and the secondary SCI (2nd SCI) within the PSSCH, and the 1st SCI may contain priority information, time/frequency resource allocation information, resource reservation information, Demodulation Reference Signal (DMRS) pattern information, 2nd SCI format indicator information, 2nd beta-offset indicator information as a parameter for the SCI and PSSCH rate matching operation, DMRS port count information, Modulation Coding Scheme (MCS) information, additional MCS table indicator information (e.g., indicating one of the 64 QAM, or 256 OAM or URLLC MCS table), PSFCH overhead indicator information (a parameter for PSSCH rate matching operation with 2nd SCI), and at least one of the reserved bits.

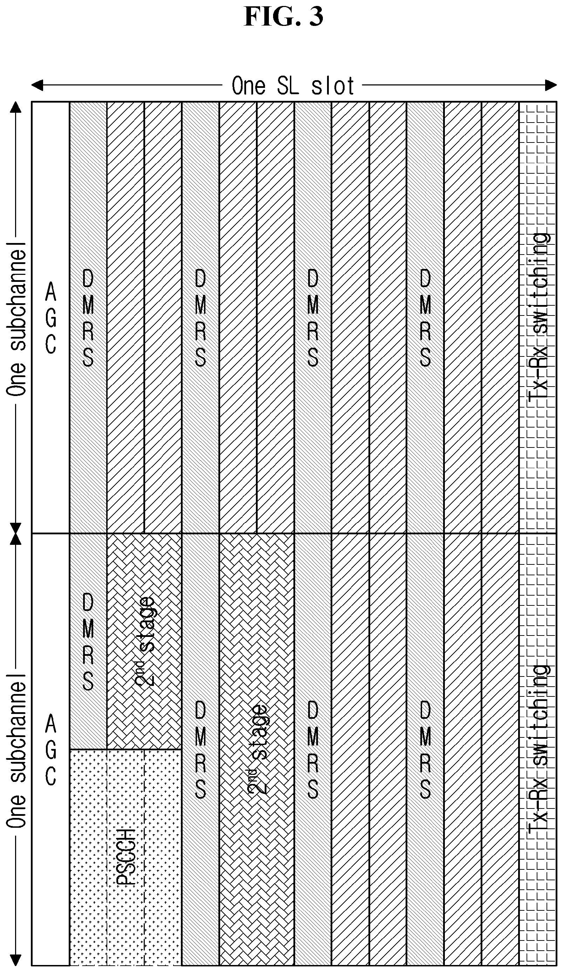

FIG. 3 illustrates an NR SL slot structure to which the present disclosure may apply.

Referring to FIG. 3, a single SL slot (SL slot) includes a single automatic gain control (AGC) symbol. Also, a single SL slot includes a single Tx-Rx switching symbol. In a single SL slot, the PSSCH that is a channel through which data is transmitted is transmitted through at least one subchannel (e.g., two subchannels in FIG. 3). Also, in a time domain, PSCCH (1st SCI), 2nd SCI, PSSCH (Data), and demodulation RS (DMRS) for demodulation may be transmitted to the remaining OFDM symbols excluding the AGC symbol and the Tx-Rx switching symbol. In detail, locations of the PSCCH (1st SCI), the 2nd SCI, PSSCH (Data), and the DMRS for demodulation may be the same as in FIG. 3, but are not limited thereto. For example, in FIG. 3, the PSCCH and the 2nd SCI are present in the first subchannel and the PSSCH and the DMRS may be allocated considering this. As another example, the second subchannel refers to a subchannel in which the PSCCH and the 2nd SCI are absent and the PSSCH and the DMRS may be allocated as in FIG. 3.

Here, the number of PSSCH DMRSs may be configured according to a higher layer configuration and one or more PSSCH DMRSs may be configured according to a channel environment of the UE. A PSCCH (1st SCI) receives a demodulation using a DMRS of PSCCH (i.e., PSCCH DMRS) and is equally allocated and transmitted to every four resource elements (REs) within a single resource block (RB). On the contrary, the 2nd SCI is decoded using the PSSCH DMRS.

Also, for example, a single resource pool associated with an NR SL may support the frequency division multiplexing (FDM), the time division multiplexing (TDM), and the spatial divisional multiplexing (SDM). This means that each resource in a single resource pool can be divided and used based on the frequency, the time, and the space, which can increase the resource efficiency.

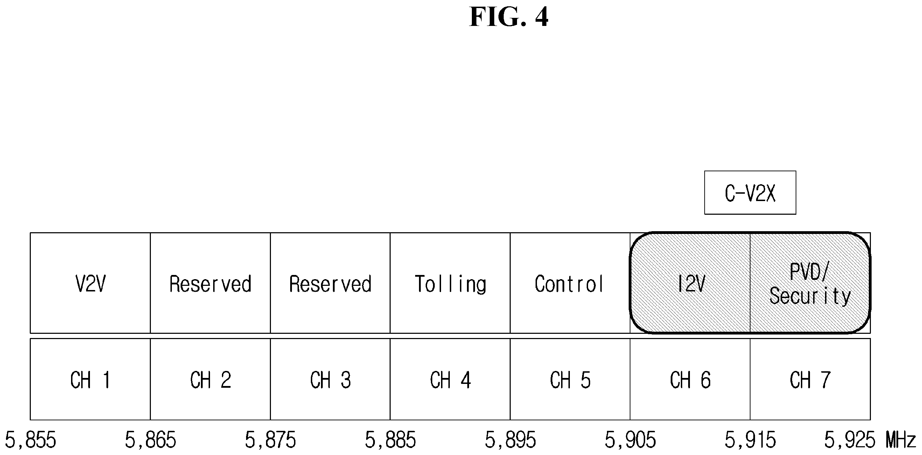

FIG. 4 illustrates an NR SL frequency to which the present disclosure may apply. For example, the NR SL may operate based on at least one of Frequency Range 1 (FR1) (sub 6 GHz) and Frequency Range 2 (FR2) (i.e., up to 52.6 GHz), the unlicensed ITS bands, and the licensed band. In detail, for example, referring to FIG. 4, 5,855 to 5,925 MHz may be allocated for an ITS service (technology neutral manner).

Also, the NR V2X quality of service (QoS) requirements may be considered. That is, the delay, the reliability, and a data rate may need to be satisfied with predetermined conditions related to the requirements for an NR V2X service. Here, the requirements may be configured as in Table 6 below and Table 7 may show the PC5 QoS for NR V2X.

Here, to satisfy the QoS requirements, the access stratum (AS) level QoS management may be required. To this end, a HARQ and CSI feedback associated with a link adaptation may be required. Also, each of the NR V2X UEs may have a different maximum bandwidth capability (max. BW capability). Considering this, AS level information that includes at least one of UE capability, QoS related information, a radio bearer configuration, and a physical layer configuration may be exchanged between the NR V2X UEs.

[Table 6]

| - Delay:[3, 100ms] |
| --- |
| - Reliability :[90%, 99.999%] |
| - Data rate: up to 1Gbps (TS22.186) |

[Table 7]

| PQI Value | Resource Type | Default Priority Level | Packet Delay Budget | Packet Error Rate | Default Maximum Data Burst Volume | Default Averaging Window | Example Services |
|---|---|---|---|---|---|---|---|
| 1 | GBR (NOTE 1) | 3 | 20 ms | 10-4 | N/A | 2000 ms | Platooning between UEs-Higher degree of automation; Platooning between UE and RSU-Higher degree of automation |
| 2 | | 4 | 50 ms | 10-2 | N/A | 2000 ms | Sensor sharing-higher degree of automation |
| 3 | | 3 | 100 ms | 10-4 | N/A | 2000 ms | Information sharing for automated driving-between UEs or UE and RSU-higher degree of automation |
| 55 | Non-GBR | 3 | 10 ms | 10-4 | N/A | N/A | Cooperative lane change-higher degree of automation |
| 56 | | 6 | 20 ms | 10-1 | N/A | N/A | Platooning informative exchange-low degree of automation; Platooning-information sharing with RSU |
| 57 | | 5 | 25 ms | 10-1 | N/A | N/A | Cooperative lane change-lower degree of automation |
| 58 | | 4 | 100 ms | 10-2 | N/A | N/A | Sensor information sharing-lower degree to an RSU |
| 59 | | 6 | 500 ms | 10-1 | N/A | N/A | Platooning-reporting to an RSU |
| 82 | Delay Critical GBR (NOTE 1) | 3 | 10 ms | 10-4 | 2000 bytes | 2000 ms | Cooperative collision avoidance; Sensor sharing-Higher degree of automation; Video sharing-higher degree of automation |
| 83 | | 2 | 3 ms | 10-5 | 2000 bytes | 2000 ms | Emergency trajectory alignment; Sensor sharing-Higher degree of automation |
| •NOTE 1: GBR and Delay Critical GBR PQIs can only be used for unicast PC5 communications. Editor's note: It is FFS if GBR and Delay Critical GBR can also be used for broadcast and groupcast. | | | | | | | |
| • NOTE 1: For standardized PQI to QoS characteristics mapping, the table will be extended/updated to support service requirements for other identified V2X services. • NOTE 2: The PQIs may be used for other services than V2X. | | | | | | | |

Hereinafter, a SL HARQ procedure is described. Whether the V2X UE is to report a HARQ feedback is indicated by a higher layer (e.g., RRC) configuration and SCI signaling (e.g., 2nd SCI). For example, if the V2X UE performs SL communication based on a groupcast, whether to report the HARQ feedback may be determined based on a distance between a Tx UE and a Rx UE.

When the V2X UE performs at least one of unicast and groupcast transmission, the SL HARQ feedback may be enabled or disabled. Here, enabling/disabling the HARQ feedback may be determined based on at least one of a channel condition (e.g., RSRP), a distance between Tx UE and Rx UE, and QoS requirements.

In the case of groupcast, whether to transmit a HARQ feedback may be determined based on a physical distance between the Tx UE and the Rx UE. Here, when the HARQ feedback is performed for the groupcast transmission via a PSSCH, the Rx UE may send a negative response only when the received PSSCH decoding fails. It may be called an option 1 operation. Moreover, when the HARQ feedback is performed for the groupcast transmission via a PSSCH, the Rx UE may send a positive response or a negative response based on whether a PSSCH decoding succeeds and it may be called an option 2 operation. In the option 1 operation of feeding back only a negative response as a NACK only HARQ feedback, if the physical distance between the Tx UE and the Rx UE is less than or equal to the communication range requirements, a HARQ feedback corresponding to the PSSCH reception may be performed. On the contrary, if the physical distance between the Tx UE and the Rx UE is greater than the communication range requirements, the V2X UE may not perform the HARQ feedback corresponding to the PSSCH reception.

Here, a location of the Tx UE is indicated to the Rx UE through SCI signaling associated with the PSSCH. The Rx UE may estimate a distance from the Tx UE based on both pieces of information included in the received SCI and its location information and may operate as above.

Also, when a unicast communication is performed based on the V2X, a case in which an SL HARQ feedback is enabled may be considered. The Rx UE may generate and transmit a HARQ ACK/NACK corresponding to the PSSCH depending on whether the decoding of a corresponding transport block (TB) succeeds.

Then, an NR SL resource allocation mode refers to a mode in which a base station schedules a SL transmission resource. Here, a mode in which the base station schedules a SL transmission resource may be mode 1. For example, when the V2X UE is located within the base station coverage, the V2X UE may receive SL resource information from the base station. On the contrary, there is a mode in which the V2X UE directly determines a resource for SL transmission on either a SL resource configured by the base station/network or a pre-configured SL resource. Here, a mode in which the UE directly determines a SL transmission resource may be mode 2.

Also, numerology and waveform for sidelink may be considered, which may be as shown in Table 8 below. In detail, regarding PSSCH/PSCCH and PSFCH in a sidelink, SCS and CP lengths supported in each of FR1 and FR2 may be as shown in Table 8 below. Here, the waveform may support only OFDM without supporting DFT-S-OFDM, but may not be limited thereto. A sidelink-synchronization signal block (SL-SSB) may be defined independently for each frequency range, which may be similar to NR-Uu.

[Table 8]

|  | FR 1 | FR2 |
|---|---|---|
| PSSCH/PSCCH and PSFCH | Normal CP for 15 kHz, 30 kHz, 60 kHz<br>- Extended CP for 60 kHz | Normal CP for 60 kHz, 120 kHz,<br>- Extended CP for 60 kHz |
| note | No support of DFT-S-OFDM for NR SL in Rel-16 | |

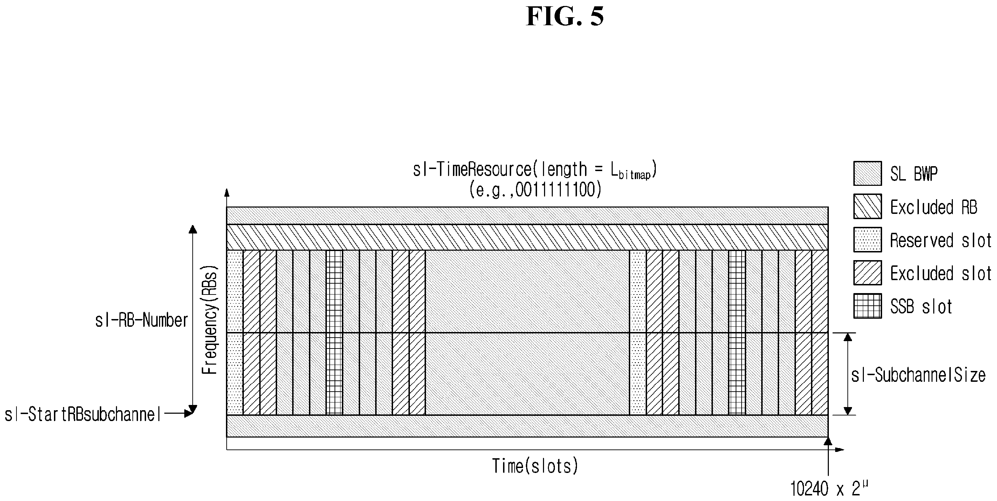

FIG. 5 illustrates an NR sidelink (SL) resource pool configuration. Referring to FIG. 5, a resource pool may represent resources in a time and a frequency used for sidelink transmission and reception. For example, at least one resource pool may be configured within a single SL BWP within a single carrier. Here, resources of the resource pool may be configured based on time resources of a slot set unit and frequency resources of a consecutive subchannel set unit. Also, the resource pool may be configured for each of transmission and reception.

In more detail, as time resources for resource pool configuration provided in an NR sidelink, at least one of a resource pool time period, a sidelink slot set (sl-TimeResource (length = $L_{bitmap}$)) within a single resource pool application period, and a first symbol and the number of consecutive symbols for a set of consecutive symbols within a single slot may be configured. As frequency resources, at least one of a bandwidth of at least one subchannel (e.g., sl-SubchannelSize = {10, 15, 20, 25, 50, 75 and 100} RBs), the entire bandwidth of the resource pool indicated by the number of consecutive subchannels (set of consecutive subchannels (e.g., sl-NumSubchannel = {1 to 27})), and a location in the frequency domain of a first subchannel of the resource pool (sl-StartRBsubchannel={0 to 265}) may be configured. For example, resources in the time domain and the frequency domain may be configured based on higher layer parameters. In FIG. 5, a frequency resource corresponding to an excluded resource block (RB) may represent some remaining RBs if total available RB resources do not exactly match a subchannel size (i.e., if it does not reach the number of RBs constituting a single subchannel). Here, the corresponding resources may not be used in the NR sidelink. Also, for example, a reserved slot may indicate a remaining slot in a situation in which a multiple unit of a length of a bitmap (e.g., sl-TimeResource) on a time resources is not established and may not be used as NR sidelink resources.

Next, a case in which an unlicensed band (unlicensed spectrum) is used for communication between a base station and a UE may be considered. For example, a communication scheme based on the unlicensed band may be a scheme of occupying a channel through competition and performing communication based on the occupied channel. The unlicensed band-based communication may be performed even for communication between the base station and the UE. In the following, described is an operation based on a case in which the unlicensed band is used for the sidelink communication. That is, the unlicensed band may be used even for sidelink communication that is communication between UEs. Also, the sidelink resource pool needs to be configured in consideration of using the sidelink unlicensed band. In more detail, the sidelink communication may be performed based on the resource pool. In the case of performing communication through the unlicensed band, the resource pool configuration needs to be differently configured.

For example, the resource pool of the sidelink communication may be configured based on a slot unit and a symbol that may be used for sidelink within a slot may be determined, which is the same as shown in FIG. 5. Also, as described above with FIG. 5, in the frequency domain, it may be configured based on the number of consecutive subchannels. The aforementioned sidelink resource pool configuration may be configured in consideration of unlicensed band communication, which is described below.

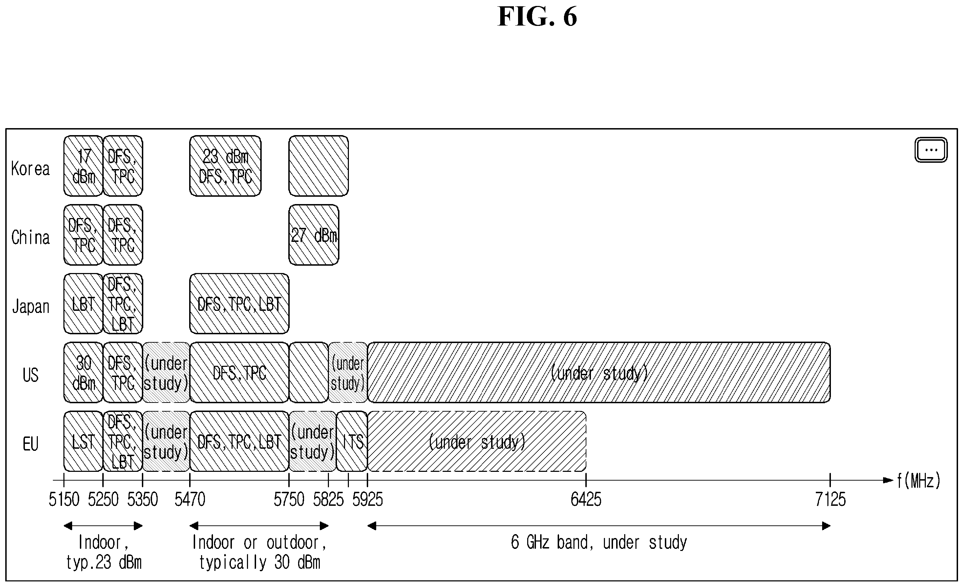

FIG. 6 illustrates an unlicensed band for each region for NR sidelink communication to which the present disclosure may apply. In Table 8 above, the frequency range of NR FR1 may be from 450 MHz to 6 GHz, but the corresponding frequency range may change from 450 MHz to 7.125 GHz. The frequency range of NR FR1 may be changed for the unlicensed band of 6 GHz band, but may not be limited thereto.

For example, the unlicensed band may be located below 1 GHz, 2.4 GHz, 5 GHz, 6 GHz, 37 GHz (USA only), and 60 GHz, but may not be limited thereto. Here, referring to FIG. 6, for example, in the system, 5 GHz band may be band 46 that is defined as 5150 to 5925 MHz. Also, for example, for LAA operation, band 49 (3550-3700 MHz) may be defined as a citizens broadband radio service (CBRS), but may not be limited thereto.

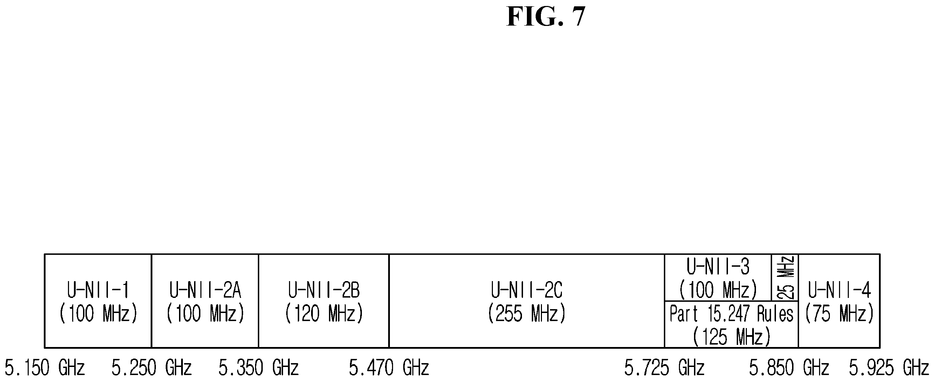

FIG. 7 illustrates use of a 5 GHz unlicensed band to which the present disclosure may apply. Referring to FIG. 7, each band within the 5 GHz unlicensed band may be set and, based thereon, use of the unlicensed band may be set. For example, it may be divided into 20 MHz units and each 20 MHz may be a single channel.

Here, the low frequency band of 5150 to 5350 MHz within the aforementioned band is specified in most regions to have the maximum transmit power of 23 dBm for indoor use. Also, in the band of 5470 MHz or more, it is used in a region with transmit power of up to 30 dBm and outdoor use in most areas. Here, for example, additional requirements may be present in some regions, given as effective isotropic radiated power (EIRP) values based on Table 9 below, along with limitation of the maximum transmit power.

[Table 9]

| Power spectral density, maximum channel occupancy time, minimum occupied bandwidth and dynamic frequency selection, transmit power control and LBT |
| --- |

Here, power spectral density (PSD) may indicate that the device is limited to performing full power transmission within a reference bandwidth. As a detailed example, European regulations may limit the PSD to 10 dBm/MHz. Therefore, in non-20MHz bandwidths, the device may not perform transmission at the maximum transmit power of 23 dBm.

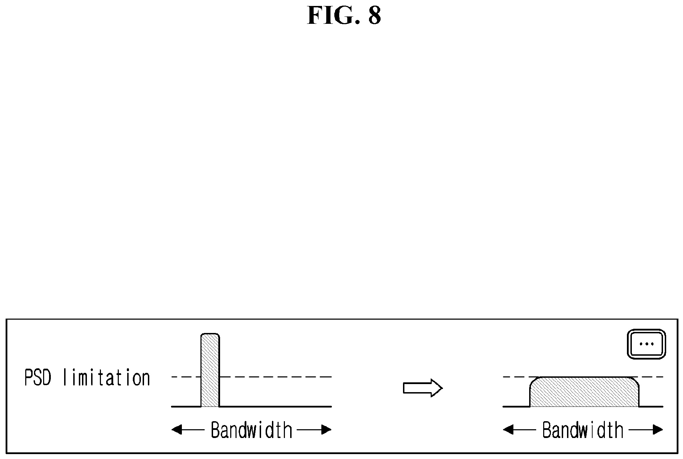

FIG. 8 illustrates a method of increasing a bandwidth in consideration of a PSD limitation to which the present disclosure may apply. For example, as in FIG. 8 a case of small data transmission that requires only a small bandwidth may be considered. Here, in the case of performing small data transmission through a wide bandwidth, coverage may be expanded. Also, minimum bandwidth occupancy regulation may be satisfied with transmission through the wide bandwidth. Considering this, a method of performing transmission in the wide bandwidth may be preferred for small data.

Also, for example, in the case of occupying a channel through a channel access procedure in the unlicensed band, a maximum channel occupancy time (COT) corresponding to an occupancy-allowable maximum time may be differently set for each region. For example, Japan allows the maximum COT of up to 4 ms, while Europe allows the maximum COT of up to 8 ms or 10 ms. However, it is only an example and is not limited to the aforementioned embodiment. Also, for example, Europe may support frame base equipment (FBE) and load base equipment (LBE) rules. Here, FBE may be set to High Performance Radio (LAN HiperLAN)/2, and LBE may be adopted and applied from Wi-Fi standard specification and both may be supported in NR as a new communication system.

Also, for example, the minimum occupied bandwidth may be a bandwidth regulation that needs to be minimally occupied when a channel access is successful once. For example, the minimum occupied bandwidth regulation may be configured to occupy a nominal channel BW of 80 to 90% or more. As a detailed example, when the UE transmits a PUSCH to the base station in an unlicensed band, resources for the PUSCH may be requested to be allocated in an interlaced form in a specific bandwidth, but may not be limited to the corresponding embodiment.

Also, a regulation for dynamic frequency selection may be a regulation that limits bandwidth use for the purpose of protecting a system (e.g., radio) having high priority for use of the unlicensed band. Also, a transmit power control regulation may be a regulation that limits transmit power much lower than an allowed maximum transmit power value to be used. Also, a listen before talk (LBT) regulation may be a regulation for a channel access procedure, and Europe may support FBE and LBE rules. Here, FBE may be Hiperlan/2, and LBE may be adopted and applied from Wi-Fi standard specification and both may be supported in NR.

Also, for example, the 5 GHz unlicensed band may be used based on the aforementioned description, but, use of the 6 GHz band is under discussion in every country and institution. Here, the 6 GHz band may be a band that is not used in a mobile system, which differs from the 5 GHz. That is, different from the 5 GHz band shared in a plurality of mobile communication systems, the 6 GHz band may be used for a single specified communication system. Therefore, problems or inefficiency arising due to coexistence of different systems may be reduced.

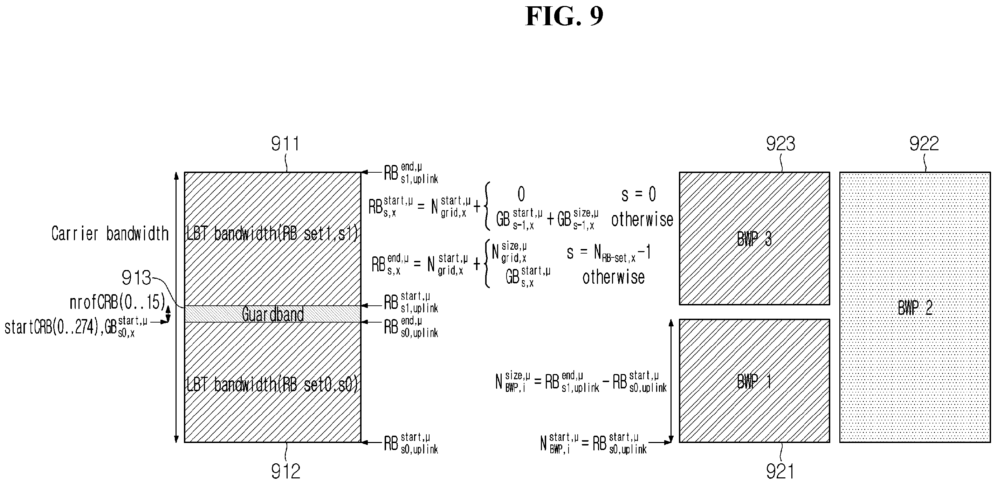

FIG. 9 illustrates a method of configuring a guard band in consideration of a shared band (e.g., unlicensed band) within an intra-cell to which the present disclosure may apply.

Referring to FIG. 9, to support a wideband operation in a shared spectrum access, a UE may receive IntraCellGuardBandsPerSCS parameter for each of an UL carrier and a DL carrier from a base station based on base station configuration. The UE may be provided with intra-cell guard bands of $N_{\text{RB-set,x}}$ - 1 in a single carrier (subcarrier spacing index=$\mu$). Referring to FIG. 9, the UE may receive higher layer signaling for a start common resource block (CRB) and the number of CRBs for each guard band. For example, the CRB may be a resource block defined/configured based on a point A that is a start location of a transmission bandwidth in a carrier in the frequency domain. The UE may verify information on the point A through base station signaling and, based thereon, may recognize a CRB location in frequency.

Here, each guard band may be defined based on $GB_{s,x}^{\text{start},\mu}$ parameter as the start CRB and, in each guard band, the size of the number of CRBs may be defined based on $GB_{s,x}^{\text{size},\mu}$ parameter. The UE may receive the aforementioned information through higher layer signaling based on each of startCRB and nrofCRBs parameters. Here, s $\in \{0,1, ..., N_{\text{RB-set,x}}$ - 2}, $N_{\text{RB-set,x}}$ denotes the number of RB sets, and x may be configured as DL or UL for downlink and uplink. $N_{\text{RB-set,x}}$ RB sets may be configured as a resource block set (RBS) within a single carrier through a guard band configuration. For example, the guard band may be configured based on IntraCellGuardBandsPerSCS parameter and the RBS may be configured within a single carrier accordingly.

Here, each RBS frequency bandwidth may correspond to an LBT frequency bandwidth. That is, each RBS may be set as a bandwidth corresponding to an LBT procedure performed through the base station and the UE. For example, in FIG. 9, if LBT succeeds in a correspondence area corresponding to the LBT bandwidth, an RB set 1 911 and an RB set 2 922 may occupy a corresponding band and may perform communication. That is, the RBS may correspond to the LBT bandwidth. For example, a Tx node (e.g., gNB or UE) may determine channel occupancy for the unlicensed band through an LBT channel access procedure performed on RBS resources corresponding to the LTE bandwidth. When the LBT procedure succeeds in a single RBS, the Tx node may perform transmission on a resource corresponding to the RBS.

Here, each RBS may be defined as a start CRB and an end CRB. The start CRB may be $RB_{s,x}^{\text{start},\mu}$, and the end CRB may be $RB_{s,x}^{\text{end},\mu}$. Here, a size of guard band 913 may be nrofCRBs. For example, a size of a guard band 913, nrofCRBs, may not be expected to be set to a size smaller than the number of applicable intra-cell guard bands defined in consideration of requirements regarding an interference status of a wireless bandwidth according to subcarrier spacing $\mu$ and carrier size $N_{\text{grid,x}}^{\text{size},\mu}$ ..

Here, the start CRB and the end CRB for each RBS (911, 912) may be determined based on RBS index s, and RBS index s may be s $\in \{0,1, ... , N_{\text{RB-set,x}}$ - 1}. That is, RBS index s may be a resource block with a size of $RB_{s,x}^{\text{size},\mu}$, and $RB_{s,x}^{\text{size},\mu}$ denotes the number of CRBs determined through the start CRB and the end CRB based on Equation 3 below. Also, in each RBS, the start CRB and the end CRB may be as shown in Equation 4 and Equation 5 below.

[Equation 3]

$$RB_{s,x}^{\text{size},\mu} = RB_{s,x}^{\text{end},\mu} - RB_{s,x}^{\text{start},\mu} + 1$$

[Equation 4]

$$RB_{s,x}^{\text{start},\mu} = N_{\text{grid,x}}^{\text{start},\mu} + \begin{cases} 0 & s = 0 \\ GB_{s-1,x}^{\text{start},\mu} + GB_{s-1,x}^{\text{size},\mu} & \text{otherwise} \end{cases}$$

[Equation 5]

$$RB_{s,x}^{\text{end},\mu} = N_{\text{grid},x}^{\text{start},\mu} + \begin{cases} N_{\text{grid},x}^{\text{size},\mu} - 1 & s = N_{\text{RB-set},x} - 1 \\ GB_{s,x}^{\text{start},\mu} - 1 & \text{otherwise} \end{cases}$$

For example, if the UE is not provided with IntraCellGuardBandsPerSCS parameter configuration, CRB indexes for a nominal intra-cell guard band and an RBS pattern based on carrier $\mu$ and carrier size $N_{\text{grid},x}^{\text{size},\mu}$ may be determined according to requirements of RF standard. Also, for example, if the aforementioned nominal intra-cell guard band and RBS pattern do not include an intra-cell guard band, an RBS of the corresponding carrier may be assumed to be 1.

For example, in FIG. 9, two LBT BWs (RBS 0, RBS1) may be configured in a single BWP 922 within a single carrier bandwidth. Here, a single guard band 913 may be configured between the two RBSs 911 and 913. A location of each of the two RBSs 911 and 913 may be determined as shown in FIG. 9, based on the aforementioned higher layer parameter. Also, for example, when a plurality of BWPs 921 and 923 are configured within a single carrier bandwidth, an RBS associated with each BWP may be verified. Here, RBSs corresponding to a first RBS (=s0, 912) and a last RBS(=s1, 911) of each BWP among the RBSs 911 and 912 within the carrier may be indexed through s0 and s1 indexes.

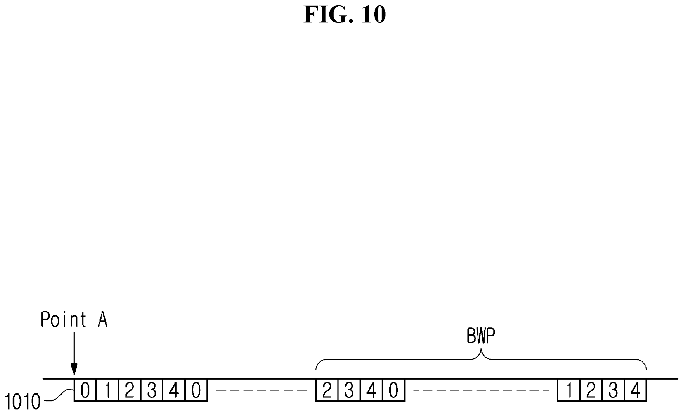

FIG. 10 illustrates an interlace-based RB resource assignment method applied to the present disclosure. PUCCH/PUSCH transmission may be performed through RB resources assigned based on interlaces. Here, a reference point for RB resource assigned based on interlace may be point A 1010. The UE may acquire information on the point A 1010 through base station signaling, which is described above. Also, a common resource block (CRB) may be a resource block defined/configured based on the point A 1010 that is a start location point of a transmission bandwidth on a carrier. That is, when physical uplink control channel (PUCCH)/physical uplink shared channel (PUSCH) transmission is performed with interlace-based RB resources, all the interlaces may be used based on the same configuration on the carrier based on the reference point A 1010 and the CRB. For example, as described above, the existing wireless communication system (e.g., LTE LAA) and wireless communication system (e.g., NR) may perform PUCCH/PUSCH transmission with the interlace-based RB resources, but may not be limited thereto.

For example, in the case of 15 kHz SCS, an interlace of M=10 may be defined for the entire bandwidth. In the case of 30 kHz SCS, an interlace of M=5 may be defined for the entire bandwidth. Also, X bits may be provided for interlace assignment through frequency resource assignment-related signaling. As a detailed example, if X = 5 for 30 kHz SCS, X bits may indicate all possible interlace combinations. As still another example, if X = 6 for 15 kHz SCS, X bits may indicate a start interlace index and the number of consecutive interlaces. For example, a value of 55 may be required based on the combination of the start interlace index and the number of consecutive interlaces. Therefore, when indicated with 6 bits, 9 remaining RIV values may be present and the 9 remaining RIV values may indicate specific pre-defined interlace combination.

Also, Y bits may be provided for RB set assignment through frequency resource assignment-related signaling. RB set assignment may be start and end RB sets based on an RIV format. Here, RB sets may be consecutive at all times. Also, for example, when two adjacent RB sets are assigned, a guard band between the RB sets may also be assigned and may be used as a frequency resource.

Also, for example, a method may be required to fairly access and use a channel between various wireless access technologies/systems (e.g., Wi-Fi, LAA, NR-U, etc.) in an unlicensed band. For example, a rule (e.g., ETSI rule) for channel access based on the aforementioned 5 GHz and 6 GHz frequency bands may be provided, and matters as shown

Table 10 below may be specified, but may not be limited thereto.

[Table 10]

| |
| --- |
| - nominal center frequencies |
| - nominal channel bandwidth and occupied channel bandwidth |
| - RF output power limits |
| - transmit power control (TPC) and power density requirements |
| - transmitter unwanted emissions limits |
| - receiver spurious emissions requirements |
| - dynamic frequency selection (DFS) |
| - adaptivity (channel access -mechanism) |
| - receiver blocking requirements |
| - user access restrictions |

(continued)

| - geo-location capability |
|---|

Here, as a channel access method based on Table 10, Frame Base Equipment (FBE) and Load Base Equipment (LBE) rules may be supported. For example, the LBE access rule may consider factors of Table 11 below. The channel access may be performed by determining a channel occupancy status based on clear channel assessment (CCA) measurement. Also, transmission based on an occupied channel may be performed after determining transmit power based on channel occupancy.

[Table 11]

| - Medium energy sensing: performs energy measurement in a transmission candidate channel during an observation slot (9 us) time based on clear channel assessment (CCA) measurement.<br>♦Energy detection (ED) threshold (TL): Threshold for determining whether a channel is occupied. If energy greater than TL is detected, the UE determines that the channel is occupied, and otherwise, determines that the channel is empty (idle). The ED threshold is specified based on the maximum transmit power as shown below, assuming 0 dBi receive antenna.<br>· For PH $\leq$ 13 dBm: TL = -75 dBm/MHz (i.e., -62 dBm / 20 MHz)<br>· For 13 dBm < PH < 23 dBm: TL = -85 dBm/MHz + (23 dBm - PH)<br>· For PH $\geq$ 23 dBm: TL = -85 dBm/MHz (i.e., -72 dBm/20 MHz) |
|---|

A channel access priority class (CAPC) may be set for channel access, which may be as shown in Table 12. Here, a priority class may specify priority based on a specific traffic type and quality of service (QoS) requirements. For example, in Table 12, four priority classes may be defined. Here, a different priority counter (p) value may be specified for each priority class. Here, the higher priority class, the lower the priority counter value may be.

Also, for example, a channel occupancy time (COT) may be a transmission burst duration. Here, the maximum COT limit may be differently determined for each different priority class. A higher priority class may have a shorter maximum COT duration. That is, a higher priority class may have a lower priority counter value and a shorter maximum COT duration.

Also, for example, a contention window (CW) may be a window for selecting a counter value for performing a backoff procedure for channel access. Here, the contention window may be different for each priority class, which may be as shown in Table 12 below.

[Table 12]

| Channel Access Priority Class ($p$) | $m_p$ | $CW_{min,p}$ | $CW_{max,p}$ | $T_{mcot,p}$ | allowed $CW_p$ sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

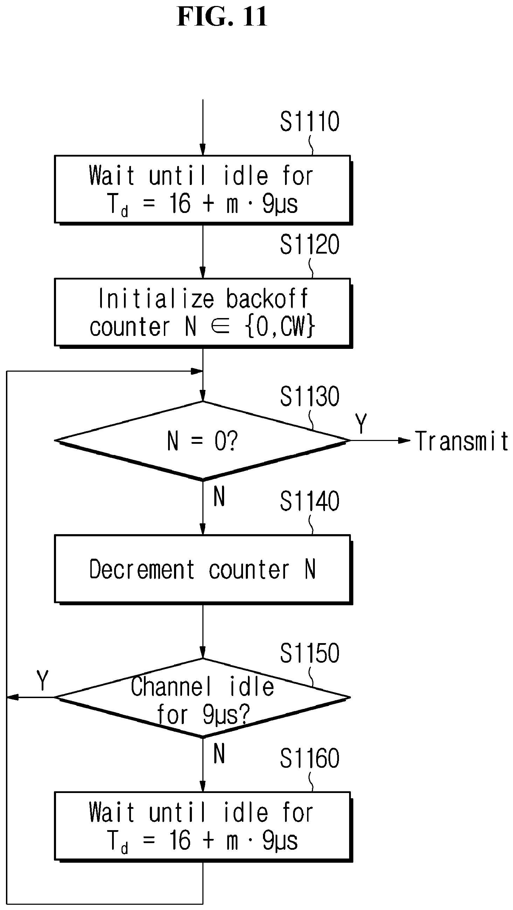

FIG. 11 illustrates a method of performing a listen before talk (LBT) procedure in an unlicensed band to which the present disclosure may apply. For example, a Type 1 LBT procedure (LBT cat 4) may be considered based on the aforementioned LBE. The LBT procedure may be set based on category 1 to category 4, which is described below. Referring to FIG. 11, a Tx node may wait to verify whether a channel is available for a defer period (S1110). Here, the defer period may be determined based on a priority class of Table 13 below. For example, the defer period may measure whether a channel is available for at least 25 us. Here, that feedback information on data transmission is transmitted within a maximum of 16 us may be considered. Considering the above, the defer period may measure whether the channel is available for at least 25 us.

When it is determined that the channel is available for the defer period, the corresponding node may perform a backoff procedure. Here, backoff counter N may be initialized to a random value between 0 and a CW value (S1120). That is, the random value between 0 and the CW value may be used as the backoff counter. Here, whether the channel is available may be counted based on 9 us slot and backoff may be performed as much as the backoff counter value. Here, a larger backoff value may be set based on a larger contention window and a collision probability may decrease accordingly.

Then, whether the backoff counter value is 0 may be determined (S1130). If the backoff counter value is 0, the corresponding node may perform transmission. The corresponding node may use the channel up to the maximum COT during which occupancy is allowed, based on a priority class for transmission. On the contrary, if the backoff counter value is not 0, the backoff counter value may decrement, that is, decrease (S1140). Then, whether the channel is idle in a next 9 us slot may be determined (S1150). Here, if the channel is in an idle state in the 9 us slot, whether the backoff counter value is 0 may be verified again. If the backoff counter value is not 0, an operation of decreasing the backoff counter value may be repeated. Through this, if the backoff counter value becomes 0, the aforementioned transmission may be performed.

On the contrary, if the channel is not idle in the 9 us slot, the corresponding node may wait again for an amount of time corresponding to the defer period and then verify whether the channel is available based on the backoff counter value (S1160). Based on the above, the corresponding node may occupy an unlicensed band and may perform transmission. Also, for example, the defer period for downlink/uplink, possible contention values, and maximum COT based on the priority class may be as shown in Table 13 below.

[Table 13]

| Priority Class | | Defer Period $T_d = 16 + m * 9us$ | Possible CW Values $\{CW_{min}, ... .., CW_{max}\}$ | Max $COT^{a,b}$ (ms) |
|---|---|---|---|---|
| 1 | DL | 25 | {3, 7} | 2 |
| | UL | 34 | | 2 |
| 2 | DL | 25 | {7, 15} | 3 |
| | UL | 34 | | 4 |
| 3 | DL | 43 | {15, 31, 63 } | 8 or 10 |
| | UL | | {15, 31, 63, 127, 255, 511, 1023} | 8 or 10 |
| 4 | DL | 79 | {15, 31, 63, 127, 255, 511, 1023} | 8 or 10 |
| | UL | | | 8 or 10 |

Here, for example, a contention window size may be adjusted based on HARQ feedback. In detail, if HARQ feedback received for a first transmission that the corresponding node performs within the COT is NACK, the contention window size may be doubled in consideration of retransmission. On the contrary, if HARQ feedback received for each transmission is ACK, the contention window size may be reset to a CW min value. Here, adjusting the contention window size with the first transmission within the COT may result in a collision in the first transmission after the node occupies the channel. In the aforementioned case, the contention window size needs to be updated. On the other hand, receiving NACK for transmission after the first transmission within the COT may be more likely to occur based on a poor channel environment or other reasons rather than collision occurrence. Accordingly, as described above, the contention window size may be adjusted based on feedback of the first transmission within the COT.

As still another example, contention window adjustment for configured grant-based downlink (DL)/uplink (UL) transmission may be performed based on feedback information in downlink/ feedback information in uplink, respectively. Also, for example, when downlink feedback transmission is absent in uplink grant-based uplink transmission, contention window adjustment may be performed through a new data indicator (NDI), but is not limited to a specific embodiment.

Also, for example, an energy detection (ED) threshold (TL) may be determined based on a parameter, a channel bandwidth, and other values. As still another example, the ED threshold may be determined depending on whether a carrier frequency is shared with other wireless access technologies (e.g., WiFi) or whether an installation method ensures the use of only a specific wireless communication system (e.g., NR). As a detailed example, in the 5 GHz band coexisting with other systems, a maximum threshold may be set to -72 dBm for 20 MHz carrier. Here, -72dBm may be a value that is determined through comparison to other wireless communication systems (e.g., WiFi system), but may not be limited to a specific embodiment. As still another example, if only a specific wireless communication system (e.g., NR) uses a carrier frequency, the maximum threshold may be used as -62dBm for 20MHz carrier and a threshold for uplink transmission may be set through RRC signaling, but may not be limited to a specific embodiment.

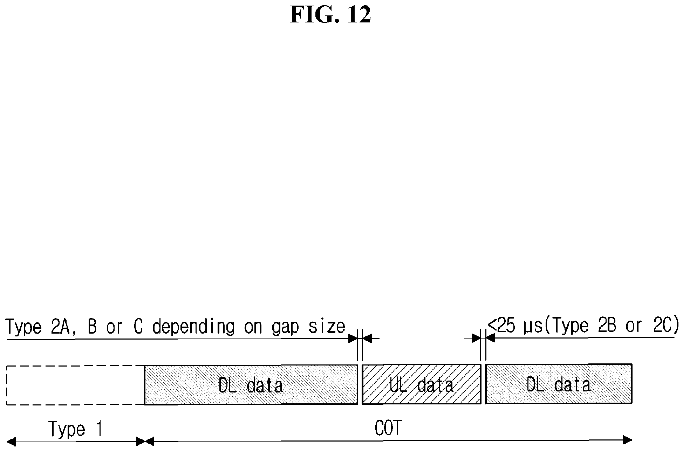

Then, FIG. 12 illustrates a COT sharing and discovery burst transmission applied to the present disclosure. Referring to FIG. 12, in the case of occupying a channel the aforementioned Type 1 LBT procedure, transmission may be performed within the COT. Here, Type 2 transmission may have three options based on a gap section within the COT, which may be as shown in Table 14 below. For example, Type 2A (LBT cat 2) transmission may set a COT gap to 25 us or more and may use the same for discovery burst transmission. For example, Type 2A may be considered for SSB transmission, but may not be limited thereto. As still another example, Type 2B transmission may be a type that applies a COT gap of 16 us. Also, Type 2C transmission may be a type that applies a COT gap of 16 us or less. For example, if next transmission is 16 us at most, idle sensing may not be required and Type 2C may be applied.

[Table 14]

| |
|---|
| - Type 2A (LBT cat 2) - applies COT gap of 25 us or more/uses the same for discovery burst transmission<br>- Type 2B - applies COT gap of 16 us<br>- Type 2C (LBT cat 1) -applies COT gap of 16 us or less |

Here, for the aforementioned COT sharing, the gap may be smaller than an OFDM symbol interval. This is because an OFDM symbol-based resource assignment method may be insufficient and a method of indicating CP extension may be applied by taking the aforementioned issues into consideration. That is, extending a CP faster than an OFDM symbol boundary may be indicated and one of Table 15 below may be indicated.

[Table 15]

| |
|---|
| - No CP extension<br>- $C_2 T_{symb}$ - $T_{TA}$ - 16 $\mu$s => use with Type 2B<br>- $C_3 T_{symb}$ - $T_{TA}$ - 25 $\mu$s, => use with Type 2A<br>- Tsymb - 25 $\mu$s - option that does not compensate for TA |

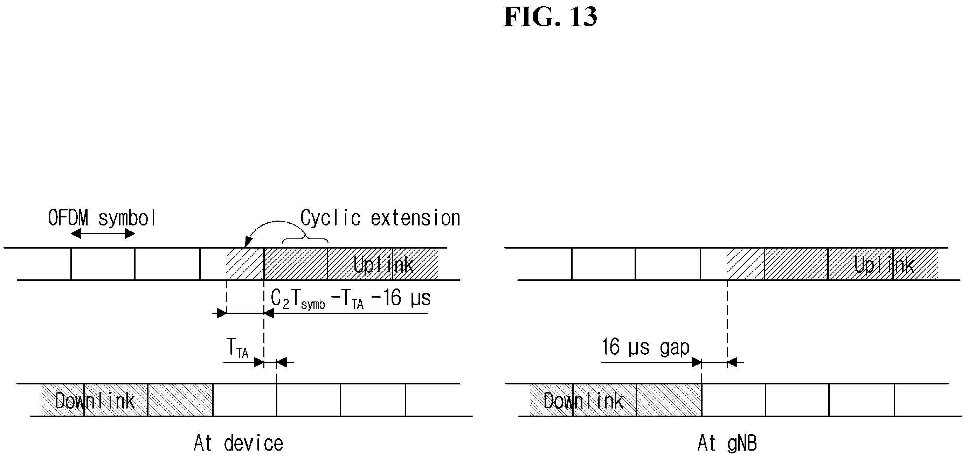

For example, FIG. 13 illustrates a method of applying CP extension to uplink when performing COT sharing between downlink and uplink, applicable to the present disclosure. FIG. 13 illustrates a case in which C2 is set to 1 with 16 us gap based on COT sharing, but is not limited thereto. Referring to FIG. 13, a TA value may be considered to ensure the 16 us gap between downlink and uplink in a base station. For example, C values may be set through RRC signaling. Also, CP extension for uplink transmission may be indicated in uplink grant.

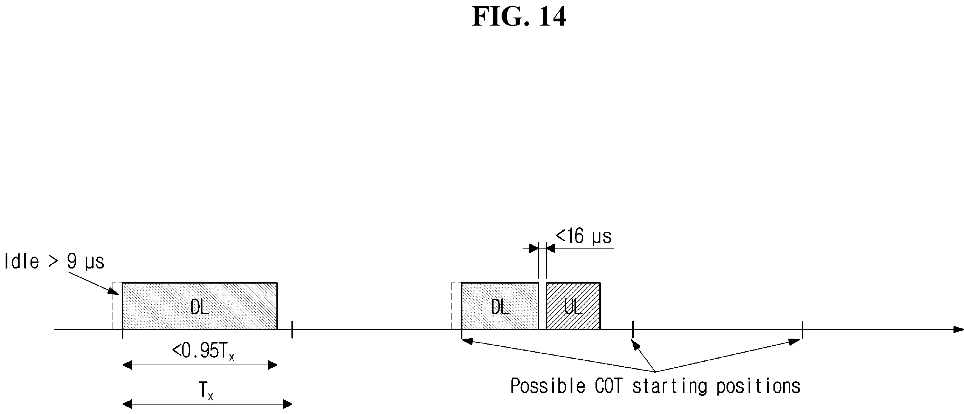

As still another example, a case of performing channel access based on a FBE method may be considered. The FBE method may be a channel occupancy method applicable to a region (e.g., specific building, factory) in which absence of other systems is ensured through a rule. Here, in the case of performing channel access based on the FBE method, transmission may start at a specific point in time. As a detailed example, FIG. 14 illustrates a semi-static channel access procedure applicable to the present disclosure. Referring to FIG. 14, a single COT may start every Tx ms. Here, when the channel is idle for at least 9 us before the COT, the channel may be occupied. Here, Tx ms may be set to one of 1 ms to 10 ms values. Also, the gap may be at least 5% of Tx. Here, COT sharing may be used in a similar manner as the LBE and the gap may be 16 us at most.

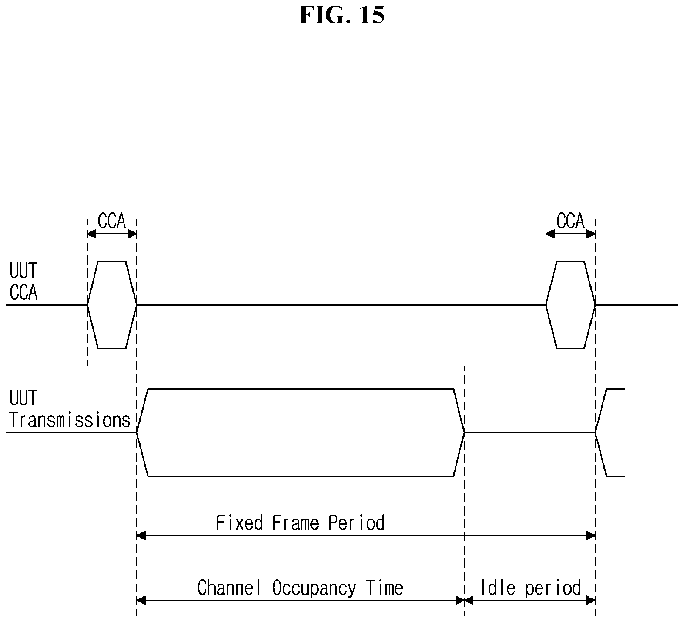

For example, FIG. 15 illustrates a method of performing channel occupancy applicable to the present disclosure. Referring to FIG. 15, a device may perform CCA check in a CCA observation period not smaller than 20 us based on energy detection, before performing transmission in an operating channel. Also, for example, in the case of transmitting a control frame (e.g., ACK, block ACK) in consideration of multicast, a CCA procedure may be skipped and transmission may be performed immediately after receiving a packet. That is, the UE may perform control frame transmission without a new CCA procedure, but this may not exceed the maximum COT.

For example, when the device transmits an ACK/NACK signal after receiving data, the device may skip the CCA, but this needs to be within the maximum COT. Also, for example, transmission of a signal with a maximum duty cycle within 5% of 50 ms as an observation period through short control signaling may be performed without CCA, but may not be limited to a specific form.

Also, for example, an LBT category may be considered. The LBT category may consider category 1 that performs transmission immediately after a short switching gap, category 2 that performs LBT without random backoff, category 3 in which a contention window of a fixed size and random backoff are performed, and category 4 in which a contention window of a variable size and random backoff are performed.

In detail, category 1 may be a method of performing transmission immediately after a short switching gap. Here, category 1 may be used to perform transmission immediately after a switching gap within one COT. The switching gap from receive to transmit within one COT may include a switching time of a transceiver, and may not be longer than 16 us. Also, for example, category 2 may be an operation of performing LBT without random backoff. For example, in the case of performing LBT, category 2 may be a method of performing initial CCA and, if the channel is idle, occupying the channel and transmitting data in an unlicensed channel. Here, random backoff count may not be performed. On the other hand, category 3 may be an LBT method in which random backoff is performed with the contention window of the fixed size. As a case in which LBT is performed based on category 3, if the channel is idle by performing initial CCA, random backoff may be performed with the fixed contention window (e.g., fixed "q" value in which q denotes a value that determines a contention window size of selecting a random N counter between 0 and q). For example, a random backoff operation allows a counter value randomly selected within the contention window to occupy the channel when the value is 0 by decreasing the count depending on whether the channel is idle for each ECCA slot.

As still another example, category 4 may be an LBT method in which random backoff is performed with the contention window of the variable size. Category 4 may differ from category 3 in that category 4 has a variable contention window. On the other hand, an operation of occupying the channel by applying an N value based on a random backoff value may be the same. That is, category 4 may be the same as category 3 except that the contention window size may differ based on a time or an event compared to category 3, and may be used in a plurality of wireless communication systems (e.g., LAA, NR-U, WiFi), but is not limited to a specific embodiment. Here, for example, different channel access categories (e.g., LBT category) may be defined and used for transmission of other channels/signals within one COT. Also, for example, in a new wireless communication system (e.g., NR-U), category 4 LBT and category 2 may be used within the COT, which may be as shown in Table 16 below. Also, category 2 LBT may be used for discovery burst transmission in a case in which there is no unicast transmission and a feature of the transmission is a limited transmission with transmission in a time of 1 ms or less and of which duty cycle is 5% or less, but may not be limited to a specific form.

[Table 16]

| Channel access LBT mechanisms defined for NR-U along with their designation: |
| --- |
| - Cat 4 LBT with a contention window (Type 1) <br> - Cat 2 LBT with 25 $\mu$s gap (Type 2A) <br> - Cat 2 LBT with 16 $\mu$s gap (Type 2B) <br> - Cat 1 LBT with no more than 16 $\mu$s gap without channel sensing (Type 2C) <br> A transmission burst length limit of 0.584 ms is applied when using this. |

In the following, a method of assigning frequency resources such that sidelink communication of a wireless communication system (e.g., NR) may be operable in an unlicensed frequency band is described. For example, currently, a size of an RB set included in 20 MHz in the unlicensed band (e.g., NR-U) of the wireless communication system may be different based on an SCS. For example, for 15 kHz SCS, the size of the RB set may be 100 to 110 PRBs. Also, for 30 kHz SCS, the size of the RB set may be 50 to 55 PRBs. Here, for example, in the case of assigning interlace-based RB resources, some interlaces may include 11 PRBs, but remaining interlaces may include only 10 PRBs.

Here, for example, a case of varying a size of a subchannel to use the entire bandwidth in sidelink may be considered. That is, a case of differently setting the number of PRBs included in each subchannel may be considered. However, in a case in which different subchannel sizes are set, it may be difficult to guarantee transmission if retransmission is performed after initial transmission of a TB with the same transport block size (TBS). Considering the above, the subchannel size (i.e., number of PRBs) in each subchannel may be set to be the same, but may not be limited thereto. However, if the subchannel size is set to be the same in each subchannel, some may not be used in a single interlace based on interlace-based RB resource configuration.

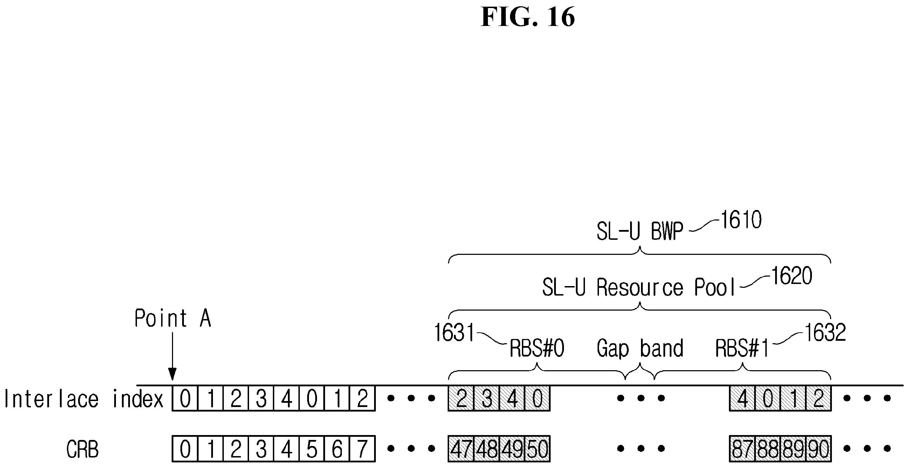

Here, for example, FIG. 16 illustrates a method of setting an RBS in a BWP and resource pool in a sidelink unlicensed band to which the present disclosure may apply. A frequency domain resource structure of a wireless communication system (e.g., NR SL-U) of the sidelink unlicensed band may consider a bandwidth part (BWP), a resource pool (RP), an interlaced RB, and an RBS (RB set). Here, the RBS may be considered even in the wireless communication system (e.g., NR U) of the unlicensed band, and it is not limited to a specific embodiment.

Referring to FIG. 16, a single sidelink unlicensed band (SL-U) BWP 1610 may be configured in a sidelink UE, a single SL-U RP 1620 may be configured in the SL-U BWP 1610, and two RBSs 1631 and 1632 may be configured in the SL-U RP 1620. However, it is only an example for clarity of description and is not limited to the aforementioned embodiment. Here, for example, in an SL-U system, an interlace structure may be considered to meet OCB and PSD requirements required in the unlicensed band. That is, in the SL-U system, the sidelink interlace structure may be performed by performing CRB indexing based on point A that is a reference frequency point of a single carrier. In FIG. 16, a frequency domain corresponding to CBR index 47 to CRB index 90 may be configured as the SL-U BWP 1610 based on configuration of the SL-U BWP 1610 and frequency resources including two RBSs RBS 1631 and 1632 may be configured based on configuration of the SL-U RP 1620, but it is only an example and may not be limited thereto. In the following, a frequency domain resource configuration method for the SL-U system as shown in FIG.16 and a resource assignment method for actual SL-U data transmission based thereon are described.

For example, in a channel access procedure of a sidelink unlicensed band wireless communication system (e.g., NR SL-U), the aforementioned type 1 channel access procedure and type 2 channel access procedure may be applied. Also, for example, UE-to-UE COT sharing may be applied to UEs that operate in the sidelink unlicensed band. That is, a single Tx UE may share a portion of unlicensed resources acquired through the LBT procedure with an Rx UE or another UE.

For example, as in the existing sidelink wireless communication system (NR SL), frequency resources may be configured based on a subchannel in the wireless communication system (e.g., NR SL-U) of the sidelink unlicensed band.

That is, the term "subchannel" may be used even in NR SL-U as in NR SL. However, the name of the subchannel may be differently configured in the wireless communication system (e.g., NR SL-U) of the sidelink unlicensed band and is not limited to a specific embodiment. The following description is made based on the subchannel for clarity of description.

For example, a single interlace-based RB structure to meet the aforementioned unlicensed band requirements may be defined as M RBs in the frequency domain. Here, the interlace-based RB structure may be defined as RBs with an interval corresponding to the uniform number of RBs. As still another example, the interlace-based RB structure may be configured using RBs with an interval corresponding the ununiform number of RBs and is not limited to a specific embodiment.

Here, the interlace-based RB structure may be preconfigured commonly for NR SL UEs in a cell-specific or carrier-specific manner according to configuration based on a bandwidth/numerology. As still another example, the interlace-based RB structure may be configured specifically in a physical link between UEs by higher layer configuration, and is not limited to a specific embodiment. Here, the interlace-based RB structure may be applied to all interlaces regardless of the carrier bandwidth. Therefore, the interlace-based RB structure may be configured according to a CRB that is defined based on point A that is a specific reference point in the frequency domain. Here, a single subchannel may be defined to be preconfigured with k interlaces. As still another example, a single subchannel may be configured with k interlaces through higher layer signaling. k may be the number of interlaces per subchannel. The number of interlaces per subchannel may have a fraction (or decimal value) or an integer value, which is described below. Also, for example, when a plurality of RBSs are configured within a single SL BWP, frequency resource assignment indication may include RBS assignment information and subchannel or interlace-based RB frequency resource assignment information.

As still another example, resource assignment may be performed based on an interlace-based RB unit rather than a "subchannel" unit in the sidelink unlicensed band system (e.g., NR SL-U). Here, the frequency resource assignment unit may be an interlace-based RB unit rather than the existing subchannel, but this is only an example and is not limited to a specific embodiment.

In the following, both the subchannel unit and interlace-based RB unit may be considered as resource allocation units in the frequency domain. Here, the subchannel may be configured with k interlaces or may be configured with the number of consecutive RBs. However, in the following, for clarity of description, the "subchannel unit" based on the interlace structure is described as the unit of frequency resource assignment. However, it is also possible to configure frequency resource assignment with the interlace-based RB unit rather than the subchannel unit by applying the proposed method, and is not limited to a specific form.

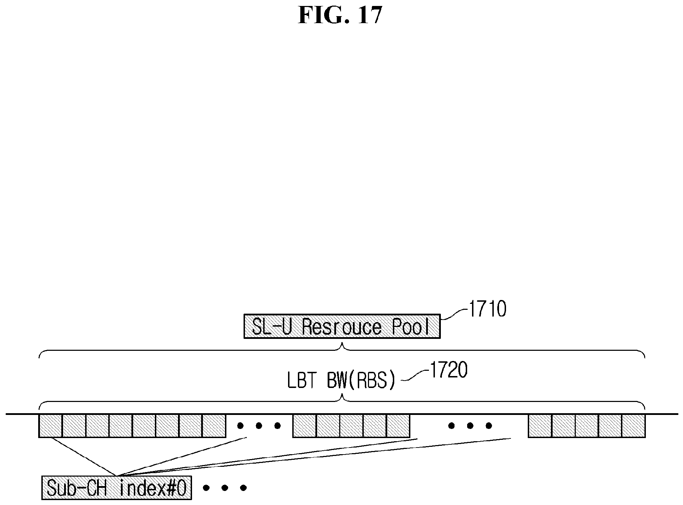

Here, for example, FIG. 17 illustrates a method of configuring a sidelink unlicensed band resource pool based on consecutive frequency resources to which the present disclosure may apply. Referring to FIG. 17, a sidelink unlicensed band resource pool 1710 may be configured based on consecutive frequency resources. Here, the sidelink unlicensed band resource pool 1710 may be indicated with only an RBS index. In more detail, referring to FIG. 17, a case in which only a single RBS 1720 is configured in the sidelink unlicensed band resource pool 1710 in consideration of the LBT procedure of the unlicensed band may be considered. Here, resource pool configuration of the sidelink unlicensed band may be indicated to the UE based on consecutive frequency resources from perspective of the frequency domain (hereinafter, Case 1). For example, to meet requirements such as the aforementioned OCB and PSD in the unlicensed band, most frequency resources (e.g., >80%) within at least one LBT BW (RBS 1720) may be configured as a single resource pool. Considering the aforementioned regulation, there may be a limit in at least one resource pool configuration for a single RBS within a single SL BWP. That is, only one resource pool may be configured to be present within a single RBS to include most frequency resources. Through this, the aforementioned regulation may be satisfied. Here, for example, sidelink transmission may be performed by selecting a resource used for actual transmission through interlace-based frequency resource assignment from a resource pool configured based on consecutive frequency resources.

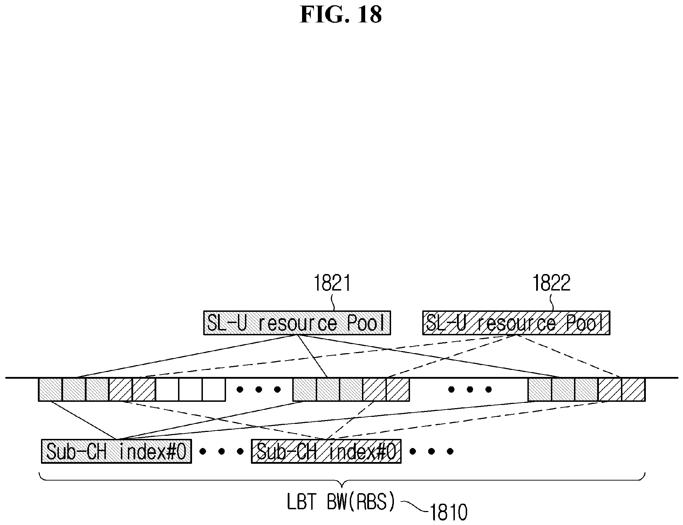

On the other hand, FIG. 18 illustrates a frequency resource-based sidelink unlicensed band resource pool configuration using interlace assignment to which the present disclosure may apply. Referring to FIG. 18, to satisfy the regulation for frequency utilization in the unlicensed band, a resource pool may be configured using a new interlace RB or an interlace RB-based subchannel from an initial resource pool configuration stage. That is, the interlace RB or the interlace RB-based subchannel may be used from resource pool configuration. For example, referring to FIG. 18, in the case of configuring a frequency resource-based sidelink unlicensed band resource pool using interlace assignment, frequency resources for resource pool configuration may be indicated based on combination of RBS and interlace /subchannel index (hereinafter, Case 2).

That is, in FIG. 18, to meet the requirements such as the aforementioned OCB and PSD, resource pools 1821 and 1822 may be configured using interlace RBs or interlace RB-based subchannels from the initial resource pool configuration stage. Therefore, the resource pools 1821 and 1822 of the sidelink unlicensed band may not have a consecutive subchannel or PRB structure. That is, the resource pools 1821 and 1822 of the sidelink unlicensed band may be configured in nonconsecutive PRBs based on interlace assignment and may meet the requirements such as the aforementioned OCB and PSD accordingly. Also, dissimilar to Case 1 (FIG. 17), a plurality of resource pools of the sidelink unlicensed band may be configured in a single RBS and thus, flexibility of resource configuration may be provided.

Here, all the resource pool configuration methods corresponding to the aforementioned Case 1 and Case 2 may consider the interlace-based frequency resource assignment method. However, there may be a difference regarding whether to configure frequency resources with consecutive frequency resources in a stage of configuring a single resource pool, which is similar to the existing NR SL, (Case 1) or whether to configure a nonconsecutive resource pool in consideration of an interlace structure from a resource pool configuration stage (Case 2). In the following, an RBS-based sidelink unlicensed band resource pool configuration method is described based on the above.

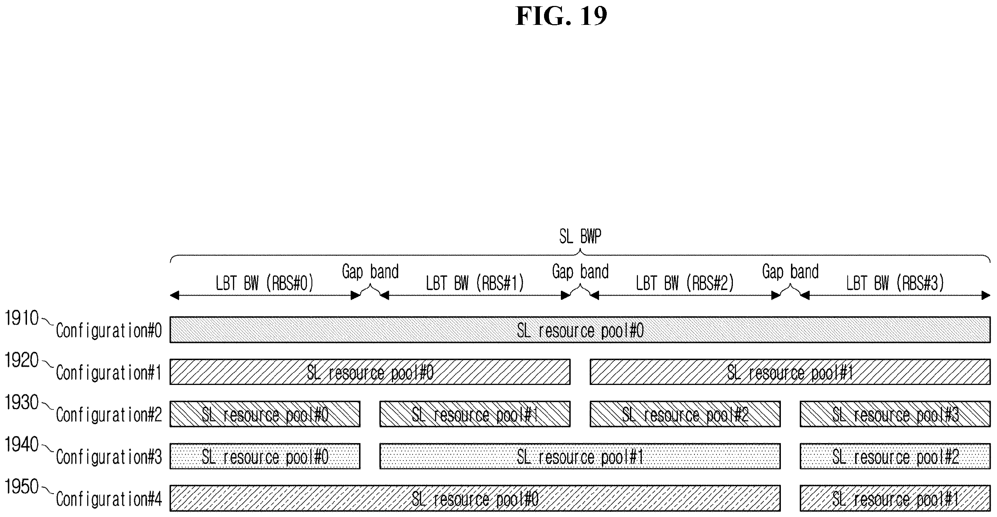

FIG. 19 illustrates a sidelink unlicensed band resource pool configuration method applicable to the present disclosure.

A sidelink unlicensed band resource pool may be configured based on RBS. For example, the sidelink resource pool may be configured through a resource pool start point and the number of subchannels within the resource pool based on consecutive subchannels. For example, as described above, even in the sidelink unlicensed band pool, the resource pool corresponding to the LBT BW may be configured through the resource pool start point and the number of subchannels within the resource pool based on consecutive subchannels. RBS configuration and index may be considered to effectively configure the sidelink unlicensed band resource pool. That is, the sidelink unlicensed band resource pool may configure a single resource pool by indicating the RBS configuration/index through resource pool configuration signaling.

As a detailed example, a single resource pool may include one RBS or one or more RBSs. Therefore, in the case of a specific resource pool, frequency configuration for the resource pool may be performed by providing consecutive RBS index configuration associated with the specific resource pool. Here, in the case of performing frequency configuration of the resource pool based on consecutive RBS index configuration, the resource pool may utilize gap band resources between RBSs, thereby maximizing frequency resource efficiency. A case in which four RBSs are configured within a single sidelink BWP may be considered. Here, since a gap band may be configured between the respective RBSs, 3 gap bands may be configured and provided. Here, the resource pool of the sidelink unlicensed band may be configured through consecutive RBS indexes based on the LBT BW. In detail, in a single resource pool configuration, frequency domain resource configuration may be provided through RBS index information. For example, in one resource pool configuration, frequency domain resource configuration may be provided through information on a start RBS index and the number of consecutive RBSs.

Referring to FIG. 19, in configuration 0 1910, a resource pool may be configured with four consecutive RBSs from RBS#0 to RBS#3. Here, configuration 0 1910 may indicate resource pool configuration by indicating RBS#0 that is a start RBS index and 4 that is the number of consecutive RBSs. As still another example, in configuration 1 1920, as two consecutive RBSs, RBS#0 and RBS#1 may be configured as sidelink resource pool#0, and RBS#2 and RBS#3 may be configured as sidelink resource pool #1. Here, configuration 1 may indicate resource pool configuration by indicating RBS#0, RBS#2 that is a start RBS index and 2 that is the number of consecutive RBSs for each resource pool. As still another example, in configuration 2 1930, sidelink resource pool#0 may be configured in RBS#0, sidelink resource pool#1 may be configured in RBS#1, sidelink resource pool#2 may be configured in RBS#2, and sidelink resource pool#3 may be configured in RBS#3. Here, since each resource pool corresponds to each RBS, the corresponding RBS index and the number of RBSs, 1, may be indicated. As still another example, in configuration 3 1940, sidelink resource pool#0 may be configured in RBS#0, sidelink resource pool#1 may be configured in RBS#1 and RBS#2, and sidelink resource pool#2 may be configured in RBS#3. Here, the start RBS index and the number of RBSs corresponding to each sidelink resource pool may be indicated and, through this, configuration for each resource pool may be indicated. As still another example, in configuration 4 1950, sidelink resource pool#0 may be configured in RBS#0, RBS#1, and RBS#2, and sidelink resource pool#1 may be configured in RBS#3. Here, the start RBS index and the number of RBSs corresponding to each sidelink resource pool may be indicated and, through this, configuration for each resource pool may be indicated. However, resource pool configuration of FIG. 19 is only an example and may not be limited to the aforementioned embodiment.

Here, for example, when a plurality of RBSs are configured in the SL BWP, frequency resource information for resource pool configuration of the sidelink unlicensed band may be indicated to the UE through at least one of interlace/subchannel-based configuration information and RBS configuration information.

Here, when all the interlace/subchannel-based configuration information and RBS configuration information are provided, frequency resource configuration information for a single resource pool may be provided to the UE through frequency resource information. Also, when an intra-cell guard band (GB) present between consecutive RBSs is configured within a single resource pool, frequency resources corresponding to the GB may be used for sidelink unlicensed band communication as a portion of the resource pool.

In the following, a method of assigning frequency resources for sidelink unlicensed band data transmission and reception in the frequency domain is described above on the above. The matters described below may be applicable to all the aforementioned methods of configuring the resource pool of at least one of interlace/subchannel-based configuration information and RBS configuration information, and are not limited to a specific embodiment.

Also, for example, the following matters may be applicable to both a case in which consecutive frequency resources are configured as a single resource pool (Case 1) and a case in which the resource pool is configured based on nonconsecutive frequency resources (Case 2). However, for clarity of description, description is made based on the case in which a single resource pool is configured based on consecutive frequency resources (Case 1), but may be interchangeably applied even to the case in which the resource pool is configured based on nonconsecutive frequency resources (Case 2), and may not be limited to a specific form.

For example, frequency resource configuration of the sidelink unlicensed band may be configured according to start subchannel information and the number of subchannels based on consecutive frequency resources. Also, time resource configuration of the sidelink unlicensed band may be based on at least one of an SSB transmission slot, a reserved slot, and TDD UL-DL configuration, and the resource pool may be configured by applying a bitmap among remaining slots, and this may not be limited to a specific embodiment.

However, the following description is made based on frequency resource configuration of the sidelink unlicensed band. For example, indication (i.e., bit size) for a sidelink resource set (SL RBS) index may be set in consideration of the total number of SL RBSs included in a single SL BWP. Here, indication for the SL RBS index may indicate one or a plurality of SL RBS indexes. For example, SL RBSs may be consecutively configured in the frequency domain, but may not be limited thereto. Here, for clarity of description, the following description is made based on SL RBSs that are consecutively configured in the frequency domain.

Also, for example, frequency resource reservation may be indicated through physical sidelink control channel (PSCCH). Here, frequency resource reservation indication may be performed in a second slot or second slot/third slot based on the PSCCH received within a lowest interlace index among interlace indexes defined within a single carrier bandwidth. The interlace structure may be set to 10 interlaces (i.e., M=10) in 15 kHz SCS and may be set to 5 interlaces (i.e., M=5) in 30 kHz SCS, based on the LBT BW that is considered in the unlicensed band, which is described above. In detail, as described above, the interlace structure may be configured by considering that the number of RBs for constituting a single RBS is 100 to 110 RBs in 15 kHz SCS and 50 to 55 RBs in 30 kHz SCS based on the LBT BW.

That is, in the case of 15 kHz SCS, some resources (i.e., RB) of the same interlace may be present every 10 RBs. Here, an interlace value may be configured with a difference value based on at least one of a different RBS size (LBT BW), SCS, and the number of RBs constituting a single interlace, and may not be limited to a specific embodiment.

In a wireless communication system (e.g., NR), the UE may perform communication through a sidelink unlicensed band (SL-U). When the UE performs communication through the sidelink unlicensed band, sidelink communication needs to be performed by considering various regulations required in the unlicensed band and channel environments and characteristics of the unlicensed band. For example, the sidelink communication may operate by considering various slot structures (e.g., slot, non-slot) for efficient operation in the SL-U. Also, the sidelink communication may operate based on interlaced-RB based transmission as a channel transmission method. In addition, a new resource assignment method, a new channel access procedure (e.g., listen before talk (LBT)), a dynamic physical sidelink feedback channel (PSFCH) resource structure, and other new physical channel structures may be applied to the sidelink communication by considering the SL-U, but it may not be limited to a specific embodiment.

For example, considering the above, a transmission method for 2nd SCI as SCI included in a PSSCH transmitted by the UE for sidelink communication may be newly configured by considering the SL-U. In the following, a 2nd SCI transmission method that considers a new SL-U system is described. In detail, a transmission method that considers the number of coded modulation symbols is described below as a rate matching method for 2nd SCI transmission.

For example, in an SL system, the UE may transmit 2nd SCI to another UE through the PSSCH. Here, the number of symbols for 2nd SCI transmission may be determined. The number of symbols for the 2nd SCI transmission may represent the number of symbols modulated after channel coding. That is, the UE may perform the 2nd SCI transmission using a portion within a PSSCH resource area, and the number of coded modulation symbols used for the 2nd SCI transmission may be determined. In detail, for example, the number of coded modulation symbols used for the 2nd SCI transmission may be determined according to Equation 6 below.

[Equation 6]

$$Q'_{SCI2} = \min\left\{\left\lceil\frac{(O_{SCI2}+L_{SCI2})\cdot\beta^{SCI2}_{offset}}{Q^{SCI2}_m \cdot R}\right\rceil, \left\lceil\alpha\sum_{l=0}^{N^{PSSCH}_{symbol}-1} M^{SCI2}_{sc}(l)\right\rceil\right\} + \gamma$$

In Equation 6, $O_{SCI2}$ denotes the number of 2nd stage SCI bits, and $L_{SCI2}$ denotes the number of cyclic redundancy check (CRC) bits for 2nd SCI. For example, $L_{SCI2}$ may be 24 bits, but it is not limited thereto. Also, $\beta^{SCI2}_{offset}$ denotes an offset value indicated by associated 1st stage SCI, and may be a value for adjusting a code rate for the 2nd SCI. Also, $M^{SCI2}_{sc}(l)$ denotes the number of resource elements (REs) used for the 2nd SCI transmission within

OFDM symbol *l*. Here, *l* may be the same as Equation 7 below, and $N_{symbol}^{PSSCH}$ of Equation 7 may be the same as Equation 8. Here, $N_{symbol}^{PSSCH}$ denotes the number of PSSCH symbols for 2nd SCI rate matching, and $M_{sc}^{SCI2}(l)$ may be determined as the number of REs used for the 2nd SCI transmission within the OFDM symbol *l* based on the number of PSSCH symbols, and description related thereto is made below. For example, $M_{sc}^{SCI2}(l)$ may be determined by considering a bandwidth of PSSCH transmission expressed based on the number of subcarriers as $M_{sc}^{PSSCH}(l)$. Also, $M_{sc}^{SCI2}(l)$ may be determined by considering $M_{sc}^{PSCCH}(l)$ that is the number of subcarriers in OFDM symbol *l* that delivers PSCCH and PSCCH DMRSs associated with the PSSCH and, and description related thereto is made below.

Also, γ denotes the number of REs that do not map within a resource block to which the last coded symbol of the 2nd SCI belongs. For example, γ may be a value that is added to ensure that resource allocation is performed in an RB unit. Also, R denotes a coding rate indicated by a modulation and coding scheme (MCS) field within SCI format 1-A. Also, α denotes a value that is set by a higher layer parameter "SL-scaling."

[Equation 7]

$$l = 0,1,2 \cdots, N_{symbol}^{PSSCH} - 1$$

[Equation 8]

$$N_{symbol}^{PSSCH} = N_{symb}^{sh} - N_{symb}^{PSFCH},$$

Also, in Equation 8, $N_{symb}^{sh} N_{symb}^{slot}$ may be the number of OFDM symbols used for PSSCH transmission, and $N_{symb}^{PSFCH}$ may be the number of OFDM symbols associated with PSFCH overhead within a single slot as a value indicated through a PSFCH overhead indication field within SCI format 1-A. In the following, a method of determining the number of coded modulation symbols for 2nd SCI in the SL-U system based on the above is described.

For example, a procedure of determining a 2nd SCI symbol may be determined. The procedure of determining the 2nd SCI symbol may be configured to minimize influence on a PSSCH rate matching (e.g., TBS determination) operation. In detail, when the number of coded symbols for 2nd SCI transmission (e.g., coded symbols for 2nd SCI resource mapping) is configured in the form in which different TBSs are derived between an initial transmission and retransmissions associated with a single TB transmission, the UE may not acquire HARQ combining gain, which may lead to causing performance degradation.

Considering the above, the number of coded symbols for 2nd SCI transmission may be set to potentially minimize changeability in using radio resources by another physical channels and reference signals. Through this, the same TBS may be determined between an initial transmission slot and a retransmission slot. For example, a case in which a plurality of PSSCH/PSCCH starting OFDM symbols are configured within a single slot through RRC signaling may be considered. The plurality of PSSCH/PSCCH starting OFDM symbols may be pre-configured within a single slot, and two OFDM symbols per slot may be configured to be used as starting OFDM symbols. However, it is only an example and the present disclosure may not be limited thereto.

The UE may be configured with a OFDM symbol number parameter used for sidelink (SL-lengthsymbols) as a higher layer parameter. Here, SL-lengthsymbols may provide a plurality of values. Also, the UE may be configured with a start symbol location parameter used for sidelink (SL-startsymbol) as the higher layer parameter. SL-startsymbol may also provide a plurality of values. However, it is only an example and the present disclosure may not be limited thereto.

Here, the different number of symbols may be set depending on a start symbol location used for sidelink. In detail, for example, when the number of starting OFDM symbols used for sidelink is set as 2, "Sl-Startsymbol_1" may indicate a first starting OFDM symbol location in a single slot, and "Sl-Startsymbol_2" may indicate a second starting OFDM symbol location in a single slot. Since a location and a length of an OFDM symbol used for sidelink within a single slot are determined based on the OFDM symbol number (SL-lengthsymbols) parameter used for sidelink and the start symbol location (SL-startsymbol) parameter used for sidelink, the corresponding parameters may be configured in a pair form through higher layer signaling.

Table 17 may be a pair form list for the OFDM symbol number (SL-lengthsymbols) parameter used for sidelink and the start symbol location (SL-startsymbol) parameter used for sidelink. In detail, for example, the pair form list may be in the form, such as "SI-lengthSymbols_1, SI-Startsymbol_1", "SI-lengthSymbols_2, SI-Startsymbol_2" ..., and a corresponding index value may be set. That is, the UE may receive configuration of the number of OFDM symbols and a start symbol location value based on a pair index value of Table 17 through higher layer signaling, but may not be limited thereto. For example, new higher layer parameters of Table 17 may be configuration values for the SL-U system. Therefore, the UE may receive configuration of the aforementioned new higher layer parameters independent of the existing SL parameters.

[Table 17]

| Pair index (via RRC configuration) | SI-Startsymbol | SI-lengthSymbols |
|---|---|---|
| Index 0 | 0 | 7 |
| Index 1 | 7 | 7 |
| Index 2 | 1 | 13 |
| Index 3 | 6 | 8 |
| ... | ... | ... |

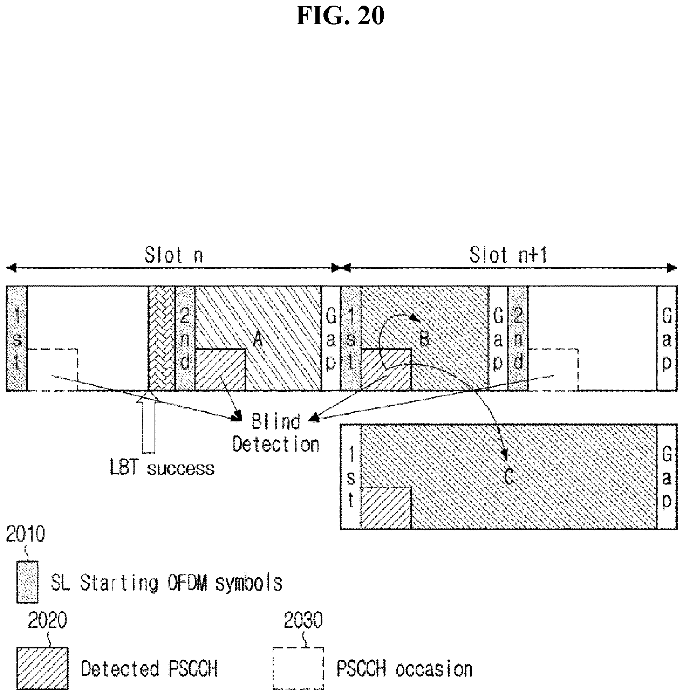

FIG. 20 illustrates a method of configuring a plurality of start symbols and symbol lengths for physical sidelink control channel (PSCCH) and physical sidelink shared channel (PSSCH) transmission, applicable to the present disclosure. For example, in Equation 8 above, $N_{symbol}^{PSSCH}$ denotes the number of PSSCH symbols for 2nd SCI rate matching, and $M_{sc}^{SCI2}(l)$ may be determined as the number of REs used for 2nd SCI transmission within OFDM symbol $l$ based on the number of PSSCH symbols. Here, values of $N_{symb}^{sh}$ and $N_{symb}^{PSFCH}$ within Equation 8 to determine the number of PSSCH symbols for 2nd SCI rate matching need to be determined.

In detail, for example, $N_{symb}^{sh}$ may be determined based on Equation 9 below. The $N_{symb}^{sh}$ value may represent the number of OFDM symbols available for PSSCH transmission. Referring to Equation 9, the $N_{symb}^{sh}$ value may correspond to a value excluding a gap symbol ($N_{symb}^{AGC,Gap}$) from an "SL-lengthSymbols" as reference value set by a higher layer.

$$[\text{Equation } 9]$$

$$N_{symb}^{sh} = \text{SL-lengthSymbols} - N_{symb}^{AGC,Gap}$$

Here, for example, the $N_{symb}^{sh}$ value may be determined in consideration of channel occupancy based on LBT performance of the unlicensed channel. Considering this, the "SL-lengthSymbols" value needs to be set using a plurality of values by higher layer signaling, unlike the existing sidelink system (e.g., {SL-lengthSymbols_1, SL-lengthSymbols_2 ... }).
The SL-lengthSymbols value may be determined as one of the plurality of set values. For example, a Tx UE may determine one of the plurality of values as the SL-lengthSymbols value at a point in time at which LBT performed by the Tx UE is successful (i.e., channel occupancy time). In detail, for example, the Tx UE may determine one of the plurality of values associated with "SL-lengthSymbols" through the higher layer signaling after LBT success. That is, one of the plurality of "SL-lengthSymbols" values may be determined and set to the UE through higher layer signaling. The $N_{symb}^{sh}$ value may be determined through a reference value of the SL symbol.
Also, for example, referring to FIG. 20, the Tx UE may occupy a channel by succeeding in LBT in the middle of a slot n. However, it is only an example for clarity of description and may not be limited thereto. The Tx UE may prepare for transmission from a next PSSCH/PSCCH transmission starting OFDM symbol 2010 after successful LBT. For example, as described above, a case in which a starting OFDM symbol location is set within a slot and a "SL-lengthSymbols" value corresponding to each start location is set may be considered. The Tx UE may determine an "SL-lengthSymbols" value (A) based on the second starting OFDM symbol 2010 since the next start symbol 2010 after LBT success is the second starting OFDM symbol.
As another example, the "SL-lengthSymbols" value may be determined based on SCI signaling, and through this, degree of freedom for scheduling may be improved. In detail, for example, the Tx UE may detect a PSCCH (SCI) 2020 through blind decoding at a first starting OFDM symbol location of slot n+1. However, it is only an example for clarity of description and the present disclosure may not be limited thereto. Here, the "SL-lengthSymbols" value may be determined through SCI signaling. In detail, for example, SCI may indicate non-slot-based PSSCH transmission such as "B." Alternatively, SCI may indicate slot-based PSSCH transmission such as "C." In the aforementioned case, the Tx UE may selectively perform scheduling. Considering the above, additional signaling may be required regarding which scheduling or resource assignment is to be applied for the PSSCH.

In detail, for example, the slot-based transmission may be a transmission that is performed based on a slot unit, and the non-slot-based transmission may be a transmission that is performed based on the number of OFDM symbols. Scheduling (or resource assignment) for slot-based transmission or non-slot-based transmission, such as slot n+1, may be selectively indicated with "enable/disable" according to higher layer configuration. As another example, the aforementioned "enable/disable" may be indicated through a field within SCI without higher layer configuration, and it is not limited to a specific embodiment. As another example, a case in which the UE acquires information on COT share from a COT-initiating UE may be considered. That is, the UE may share a channel occupancy time from the COT-initiating UE. When the UE performs PSSCH/PSCCH transmission based on COT share information, the UE may determine a starting OFDM symbol index and symbol length through the received COT share information based on at least one of SCI and MAC CE signaling.

For example, a sidelink starting OFDM symbol may be used for AGC purpose. That is, the Tx UE may perform transmission by repeatedly assigning information assigned to a next OFDM symbol to the starting OFDM symbol for the AGC purpose. The Rx UE may perform an AGC operation using a starting OFDM symbol time. Then, the Tx UE may use an OFDM symbol following an AGC symbol for the PSSCH/PSCCH and other sidelink channels and signals. Here, the Rx UE may determine an associated SL-lengthSymbols value based on an SL-startsymbol value for starting the PSCCH and the $2^{nd}$ SCI and may apply the same to Equation 9 above. For example, the SL-startsymbol value may be determined based on the channel occupancy time according to LBT results and, based on this, from which starting OFDM symbol the sidelink transmission starts.

Also, for example, in the existing sidelink, AGC ($1^{st}$ OFDM symbol) and Tx-Rx switching (last symbol) are present within a single slot at all times. However, in the SL-U, since a channel is occupied based on a channel occupancy procedure and transmission may be required in consecutive time (slot, non-slot) within the channel, a slot structure different from the existing slot structure may be required. Considering the above, AGC and a gap symbol may be absent in the SL-U and an indication method for this may be required. In detail, for example, a gap symbol ( $N_{symb}^{AGC,Gap}$ ) value of Equation 9 may be explicitly indicated based on at least one of SCI signaling and higher layer signaling. For example, when the $N_{symb}^{AGC,Gap}$ value is explicitly indicated by SCI signaling, the SCI may include a field that indicates an AGC/gap symbol presence status and the number of corresponding symbols. The UE may determine $2^{nd}$ SCI matching and PSSCH TBS by reflecting the aforementioned indication information. For example, configuration information on the AGC/number of gap symbols may be preconfigured by higher layer signaling. A size of the field that indicates the AGC/gap symbol presence status and the number of corresponding symbols in the SCI may be determined based on the preconfigured AGC/number of gap symbols, and any one value among the aforementioned numbers may be indicated through the SCI.

As another example, the gap symbol ( $N_{symb}^{AGC,Gap}$ ) may be implicitly determined according to PSSCH resource assignment information that is provided based on a sidelink starting OFDM symbol location and the number of sidelink symbols according to an LBT success point in time. For example, when a specific gap symbol is used for PSSCH transmission based on LBT success, the gap symbol ( $N_{symb}^{AGC,Gap}$ ) value in Equation 9 may be differently set.

As another example, the $N_{symb}^{AGC,Gap}$ value refers to a value that is predetermined as a representative value or a reference value, and the reference value may be used differently from one used as an actual gap symbol (e.g., $N_{symb}^{AGC,Gap}=2$ ). Alternatively, the gap symbol ( $N_{symb}^{AGC,Gap}$ ) value may be used as a preset value based on at least one of SCI and the higher layer. For example, when the gap symbol ( $N_{symb}^{AGC,Gap}$ ) value is indicated by SCI signaling, the SCI may include the field that indicates the gap symbol presence status and the number of corresponding symbols. The UE may determine the $2^{nd}$ SCI rate matching and the PSSCH TBS by reflecting the indicated information. As another example, configuration information on the AGC/number of gap symbols may be preconfigured by higher layer signaling. The size of the field that indicates the AGC/gap symbol presence status and the number of corresponding symbols in the SCI may be determined based on the preconfigured AGC/number of gap symbols, and any one value among the aforementioned numbers may be indicated through SCI.

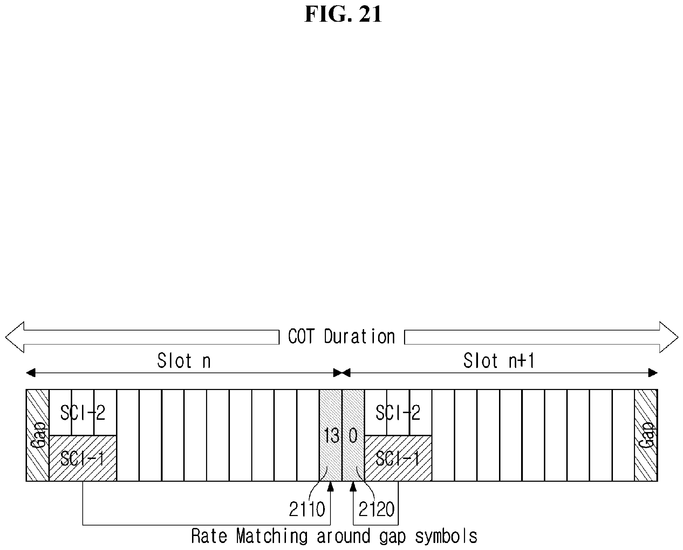

FIG. 21 illustrates a rate matching method based on AGC/gap symbol presence status indication, applicable to the present disclosure.

Referring to FIG. 21, the Tx UE may occupy a channel based on LBT success and then may perform sidelink transmission to the same Rx UE(s) in consecutive sidelink slots. The Tx UE may use gap symbols as resources for sidelink PSSCH/PSSCH transmission to maximize transmission efficiency. That is, the Tx UE may perform sidelink transmission in gap symbols different from the existing sidelink. For example, referring to FIG. 21, an OFDM symbol index 13 2110 of slot n and an OFDM symbol index 0 2120 of slot n+1 may be used as resources for sidelink PSSCH/PSCCH transmission and, through this, a data transmission rate may be improved by maximizing the frequency use efficiency. Here, the gap symbol ( $N_{symb}^{AGC,Gap}$ ) value may be determined based on the field within SCI or higher layer signaling. In detail, for example, the gap symbol ( $N_{symb}^{AGC,Gap}$ ) value may be explicitly indicated as one value of {0, 1, 2} based on SCI signaling. As another example, the gap symbol ( $N_{symb}^{AGC,Gap}$ ) value may be implicitly determined according to PSSCH resource assignment based on the LBT results. For example, in FIG. 21, specific gap symbols 2110 and 2120 are used for PSSCH transmission, the gap symbol ( $N_{symb}^{AGC,Gap}$ ) value may be implicitly differently determined. Based on the above, the gap symbol( $N_{symb}^{AGC,Gap}$ ) value of Equation 9 for 2nd SCI rate matching may be ultimately determined.

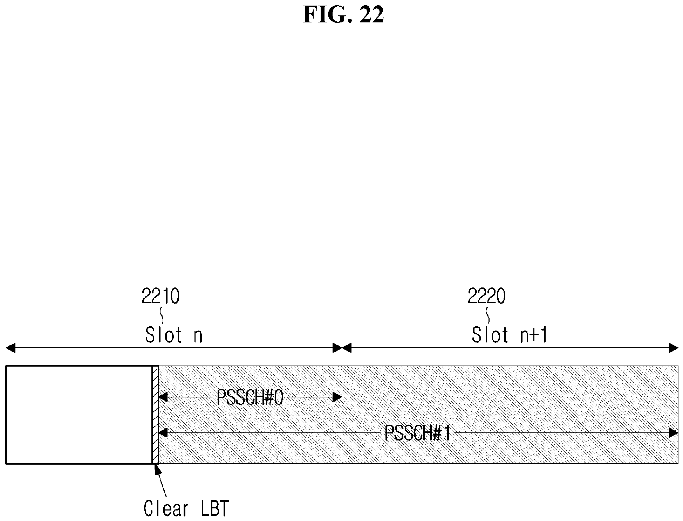

As another example, FIG. 22 illustrates a method of transmitting sidelink data based on LBT success in the middle of a slot, applicable to the present disclosure. For example, a Uu link may not be configured in the unlicensed band in which SL-U is operated. Here, as the sidelink symbol length, "sl-lengthSymbols" may be set to one of values within 0 to 14*k-1. Also, as the unlicensed band sidelink symbol length, "Sl-unlicensed-lengthSymbols" may be set to one of values of 0 to 11. In detail, for example, sl-lengthSymbols may be set to 14, and Sl-unlicensed-lengthSymbols may be set to 7.

For example, referring to FIG. 22, when LBT is successful in the middle of slot n 2210 and then the slot n 2210 as a partial slot and slot n+1 2220 as a full slot are concatenated to perform a single PSSCH/PSCCH transmission, Sl-lengthSymbols may be set to 21. However, it is only a configuration for clarity of description and the present disclosure may not limited thereto.

The aforementioned description is made based on a case in which a PSFCH is not included in a slot. However, the PSFCH may be included in the slot, and a rate matching method for 2nd SCI assignment may be required in the slot that includes the PSFCH. The $N_{symb}^{PSFCH}$ value may be determined as the PSFCH overhead symbol in Equation 8 above.

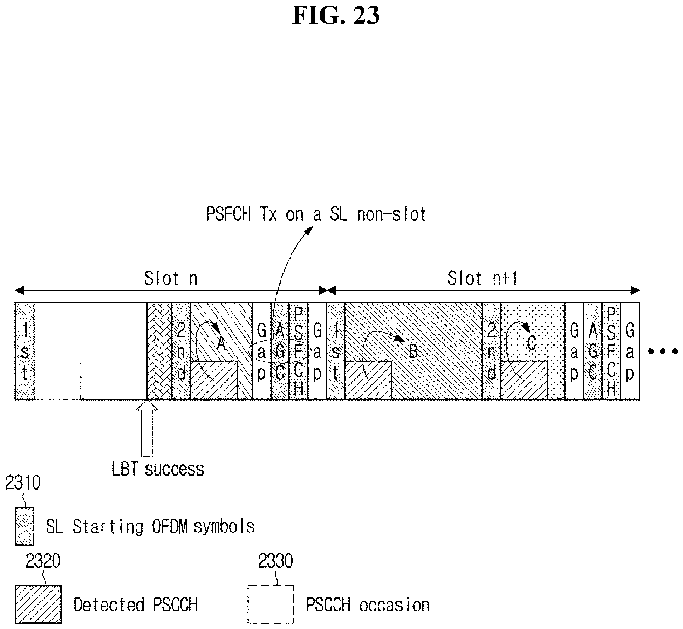

FIG. 23 illustrates an SL non-slot-based PSFCH transmission method in the SL-U, applicable to the present disclosure. For example, the $N_{symb}^{PSFCH}$ value may be indicated based on a non-slot. If SL-PSFCH-period value =1, 2, or 4, the PSFCH overhead indication field within SCI format 1-A may indicate a PSFCH overhead presence status. For example, even when PSFCH resources are present in every slot as a case for SL-PSFCH-period value = 1, the PSFCH overhead indication field within SCI format 1-A may indicate the PSFCH overhead presence status. On the other hand, if SL-PSFCH-period value = 0, the PSFCH overhead may be absent. In this case, $N_{symb}^{PSFCH} = 0$. Referring to FIG. 23, the UE may succeed in LBT in the middle of a slot, and a starting OFDM symbol 2310 and the number of OFDM symbols available for PSSCH transmission may be determined. Here, the number of PSSCH symbols for 2nd SCI rate matching may be determined by reflecting the $N_{symb}^{PSFCH}$ value based on Equation 8. For example, the PSFCH overhead indication field may be included in SCI of a PSCCH 2320 detected by the UE based on blind decoding. The $N_{symb}^{PSFCH}$ value may be determined by considering whether PSFCH overhead is present based on the PSFCH overhead indication field within the SCI. In detail, for example, when the PSFCH overhead indication field within the SCI indicates presence of the PSFCH overhead, $N_{symb}^{PSFCH} = 3$. However, it is only an example and the present disclosure may not be limited thereto. On the other hand, when the PSFCH overhead indication field does not indicate presence of the PSFCH overhead, $N_{symb}^{PSFCH} = 0$. Also, for example, when the SL-PSFCH-period value is additionally introduced and configured to set PSFCH resources in every non-slot, $N_{symb}^{PSFCH} = 3$ may be set in all non-slots, but it may not be limited thereto.

As another example, PSFCH overhead indication may be dynamically performed. Here, the PSFCH overhead indication may be performed without PSFCH resource configuration, such as the SL-PSFCH-period. For example, the PSFCH overhead may be indicated through the PSFCH overhead indication field. Unlike what is described above, the PSFCH overhead does not depend on the SL-PSFCH-period value that is a higher layer parameter, and may be indicated only through the PSFCH overhead indication field within the SCI. For example, in the existing sidelink, periodic PSFCH period configuration may be possible. On the other hand, a case in which PSFCH resource configuration is possible only within COT in the SL-U may be considered. Here, the UE may explicitly indicate the PSFCH overhead through SCI signaling in a channel occupied depending on a channel occupancy situation based on LBT success.

As another example, the PSFCH overhead may be indicated in an implicit manner. For example, if HARQ feedback for the PSSCH transmitted within previous COT is not performed within the same COT, the PSFCH transmission may be determined to be performed in a specific slot within next COT (e.g., very first slot within the next COT). Here, in the case of performing 2nd SCI transmission in the specific slot, $N_{symb}^{PSFCH} = 3$. On the other hand, if the PSFCH transmission is not performed, it may be determined as $N_{symb}^{PSFCH} = 0$, but may not be limited thereto.

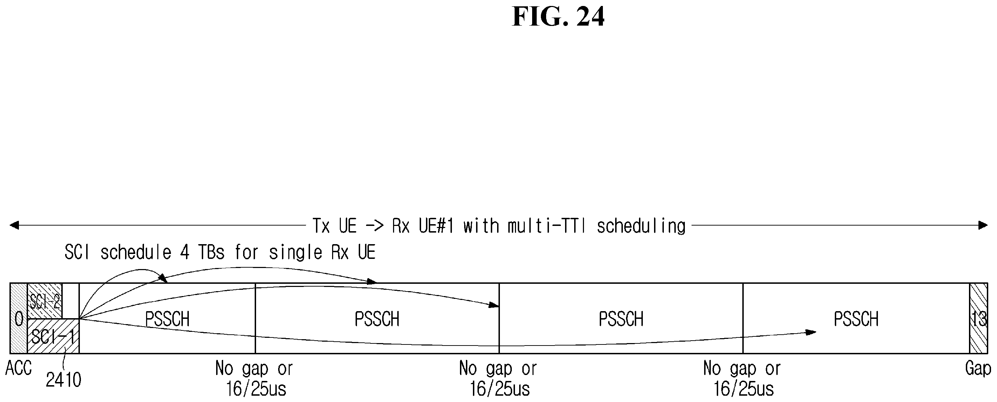

FIG. 24 illustrates a method of scheduling a plurality of transmission time intervals (TTIs) through one SCI signaling, applicable to the present disclosure. For example, the existing sidelink system assigns two OFDM symbols within every slot as gap symbols for AGC/Tx-Rx switching purpose, to perform AGC and Tx-Rx switching. However, the SL-U system may ensure that all of the aforementioned gap symbols are not included in all slots. For example, in the SL-U system, the UE may perform consecutive sidelink transmission through a channel occupied within COT after LBT success. According to the aforementioned transmission method, the Tx UE may perform sidelink transmission in consecutive slots within the COT. For example, in FIG. 24, the UE may perform scheduling for all slots occupied within the COT after LBT success through one SCI 2410, and accordingly data transmission may be performed even in a gap symbol. The Rx UEs do not need to assume that a gap symbol is included in all slots. Therefore, in the SL-U system, gap symbols may be used for data transmission to improve resource efficiency and transmission performance.

In detail, for example, the $M_{sc}^{SCI2}(l)$ value within Equation 6 above may be a value that determines upper limit of the number of 2nd SCI coded symbols with $\alpha$. For example, $M_{sc}^{SCI2}(l)$ may represent the number of REs for assigning 2nd SCI for each single OFDM symbol. Through $Q'_{SCI2}$ of Equation 6, $\sum_{l=0}^{N_{symbol}^{PSSCH}-1} M_{sc}^{SCI2}(l)$ operation may be performed. Through this, the number of REs assigned for the 2nd SCI may be calculated in OFDM symbols to which the PSSCH is assigned, and may be scaled through $\alpha$. For example, determination of $M_{sc}^{SCI2}(l)$ for 2nd SCI rate matching for the SL-U system may be as shown in Equation 10 below. In detail, the $M_{sc}^{PSSCH}(l)$ value may be calculated based on the above. For example, the $M_{sc}^{PSCCH}(l)$ value may denote the number of REs used for the PSCCH in a single OFDM symbol, and through the corresponding value, the $M_{sc}^{SCI2}(l)$ value may be determined in Equation 10.

[Equation 10]

$$M_{sc}^{SCI2}(l) = M_{sc}^{PSSCH}(l) - M_{sc}^{PSCCH}(l) - M_{sc}^{SL-SSB}(l) \text{ (SL SSB and PSSCH (including 2}^{nd}$$

SCI))

Also, for example, a case in which multiplexing is applied between the SL-SSB and the PSSCH/PSCCH may be considered. That is, a case of additionally assigning the SL SSB within PSSCH transmission resources may be considered. For example, in the existing sidelink, the SL-SSB may not be included in a resource pool. However, in the SL-U, additional SL-SSB transmission may be considered in consideration of LBT failure, and a portion of the additional SL-SSB may be transmitted within resources related to PSSCH/PSCCH transmission. Also, the aforementioned SL-SSB transmission may be preferred to transmit together the PSCCH/PSSCH to meet the OCB/PSD requirements, but it may not be limited thereto.

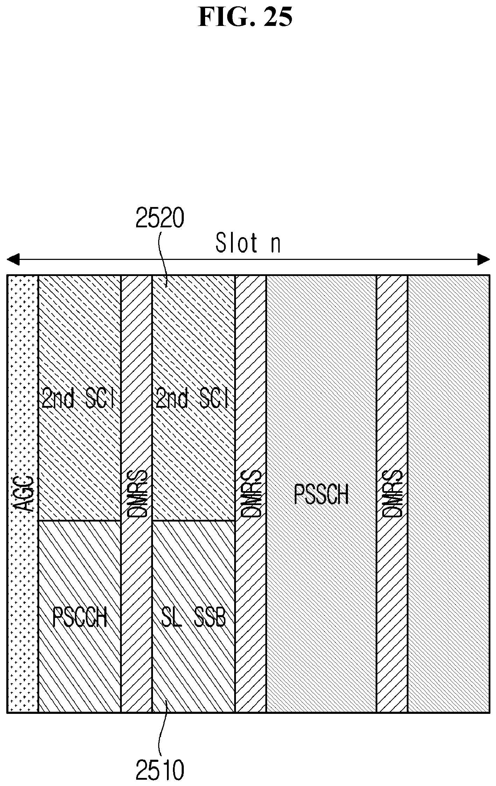

FIG. 25 illustrates a method of applying multiplexing between an SL SSB and a PSSCH/PSCCH, applicable to the present disclosure. For example, when the UE performs SL SSB transmission in the unlicensed band, the UE may multiplex SL-SSB transmission in the same slot with other sidelink physical layer transmissions, such as PSSCH/PSCCH, to maximize the LBT success probability and to improve the transmission efficiency. Referring to FIG. 25, a portion of PSSCH transmission resources may be used as transmission resources of an SL-SSB 2510. Here, 2nd SCI rate matching may be performed by considering whether the SL-SSB 2510 is present. For example, as in FIG. 25, if transmission of 2nd

SCI 2520 and transmission of the SL-SSB 2510 are performed in the same slot, the $M_{sc}^{SCI2}(l)$ value may be determined in consideration of SL-SSB transmission resources, which may be as shown in Equation 10. On the other hand, if the transmission of the 2nd SCI 2520 and the transmission of the SL-SSB 2510 are not performed in the same slot, the $M_{sc}^{SL-SSB}(l)$ value may be 0 in Equation 10, and based on this, the $M_{sc}^{SCI2}(l)$ value may be determined.

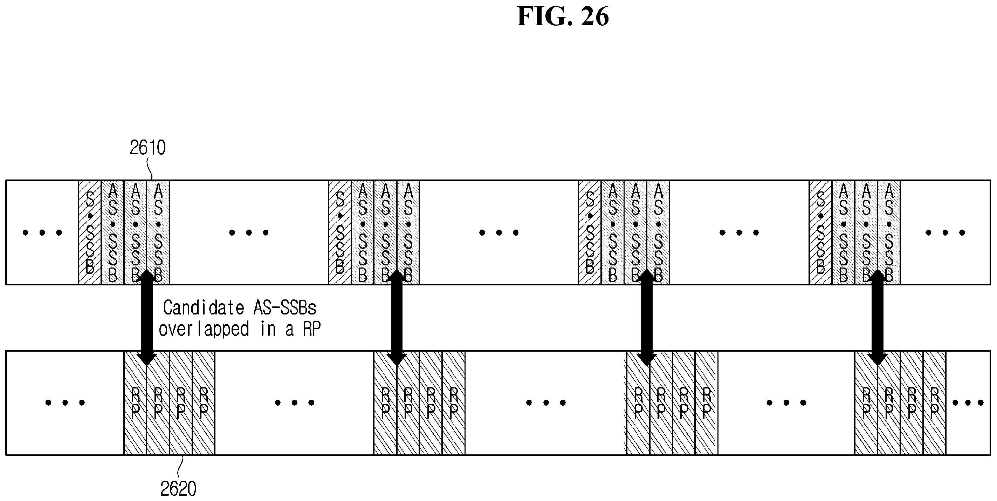

FIG. 26 illustrates a case in which an additional SL-SSB occasion is configured within a resource pool, applicable to the present disclosure. Referring to FIG. 26, transmission of an additional SL-SSB 2610 may be performed within a resource pool 2620. That is, an additional SL-SSB occasion may be configured within the resource pool 2620. Here, 2nd SCI rate matching may be configured in consideration of latent SL-SSB transmission, and is not limited to a specific embodiment.

As another example, a 2nd SCI resource mapping operation for SL-U may be considered. For example, the UE may perform sidelink transmission in COT based on LBT success, and the sidelink transmission may be performed in consecutive slots. Here, for example, whether LBT is successful may not occur in a slot boundary. That is, the UE may succeed in LBT in the middle of a slot. The UE may assign an associated DMRS, PSCCH, and 2nd SCI from a specific OFDM symbol (e.g., AGC or PSCCH/PSSCH start symbol after LBT success) based on the aforementioned parameters.

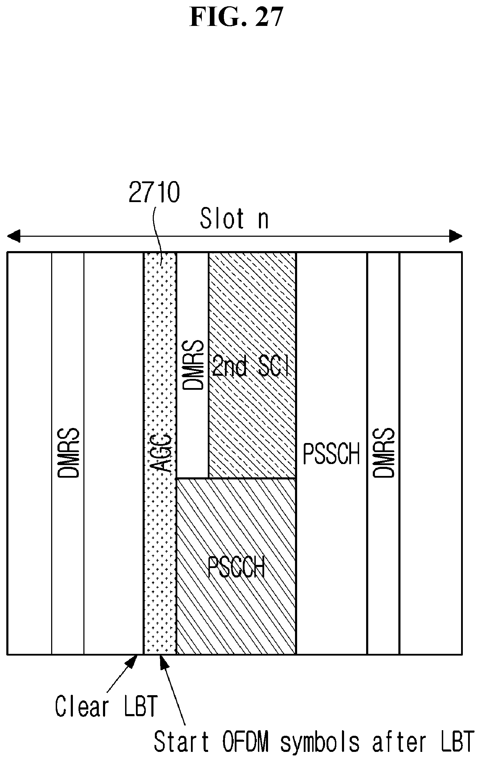

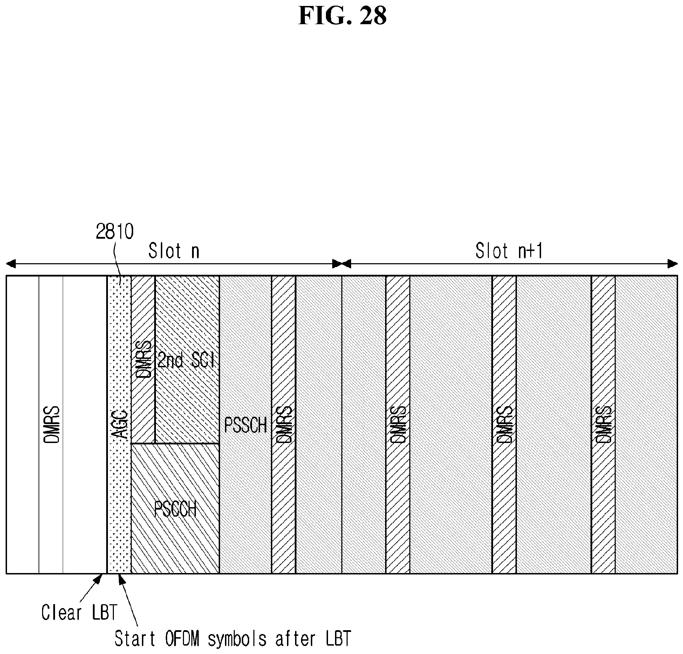

FIG. 27 illustrates a method of performing non-slot-based sidelink transmission that includes 2nd SCI after LBT success, applicable to the present disclosure, and FIG. 28 illustrates a method of performing non-slot and slot-based sidelink transmission that includes 2nd SCI after LBT success, applicable to the present disclosure. The UE may set a specific OFDM symbol as a starting OFDM symbol for PSSCH/PSCCH transmission within a single slot after LBT success. Referring to FIG. 27, assignment based on AGC purpose may be performed in a starting OFDM symbol 2710. As described above, a symbol of the AGC purpose may be a symbol to which signals for PSSCH/PSCCH or DMRS, PTRS, and CSI-RS assigned to an immediate next symbol are duplicated and assigned. Then, the DMRS and the PSSCH may be assigned to a next symbol. For example, in FIG. 28, the UE may succeed in LBT in slot n. Therefore, DMRS time domain configuration within slot n (e.g., three DMRS symbols in a slot) may be maintained as is, and the number of available DMRS symbols may be determined based on an LBT success point in time within the slot n that is a first slot. For example, in FIG. 28, as a case in which AGC is configured as a start PSSCH OFDM symbol 2810, a starting OFDM symbol may be configured through a higher layer, but the present disclosure is not limited thereto. Also, a gap symbol may be absent between slot n and slot n+1 within COT based on LBT success of the UE.

For example, in relation to 2nd SCI rate matching, an operation that considers transmission in a plurality of consecutive slots may be performed. That is, the UE may succeed in LBT and may perform a sidelink transmission in a plurality of consecutive slots included in COT duration based on LBT. Here, dynamic PSFCH resource indication related to 2nd SCI rate matching may enable at least one PSFCH resource indication per slot. Also, as described above, the SCI may schedule a plurality of TTIs. Also, as described above, a case in which the SL-SSB is multiplexed and transmitted on PSCCH/PSSCH resources in the SL-U may be considered. Also, in the SL-U system, whether the UE succeeds in LBT may be determined based on an RBS unit. Here, whether the PSCCH is present may be different depending on whether LBT is successful for each configured RBS. Alternatively, when the LBT is successful in at least one RBS, whether the PSCCH is present only in a single RBS or present in another RBS may be considered.

Also, for example, in Equation 6, a higher beta-offset value than one in initial transmission may be applied during a retransmission, and a rate matching operation for 2nd SCI assignment may be performed by reflecting this.

As another example, in relation to 2nd SCI rate matching, the aforementioned operation may be considered for 2nd SCI mapping based on the 1st SCI PSFCH indication. Here, a channel state information-reference signal (CSI-RS) may not be considered, and a DMRS for TBS may be considered. Also, the UE may recognize a phase tracking reference signal (PT-RS) before performing 2nd SCI decoding. Also, 2nd SCI may be assigned after the PSSCH DMRS symbol. For example, if the DMRS symbol is omitted, the 2nd SCI assignment method may be different. As another example, when the UE performs a blind retransmission, the TBS may be maintained or differently set, and is not limited to a specific embodiment.

Also, for example, in Equation 6, for 2nd SCI mapping, a $\gamma$ value for TBS calculation may be set to 0 and accordingly, the fixed TBS may be considered in HARQ operation. For example, $\gamma$ refers to a value considered to generate the 2nd SCI in RB units and may have one of values of 0 to 11. Here, the $\gamma$ value may be a value that is ignored since the gap increases according to an increase in actual TBS. For example, since a TBS value is determined based on quantization, the same TBS may be used for initial transmission and retransmission regardless of the $\gamma$ value. However, it may not be limited thereto. Also, for example, a code rate of the 2nd SCI may be less than a code rate of the 1st SCI, but it may be differently configured and is not limited to a specific embodiment.

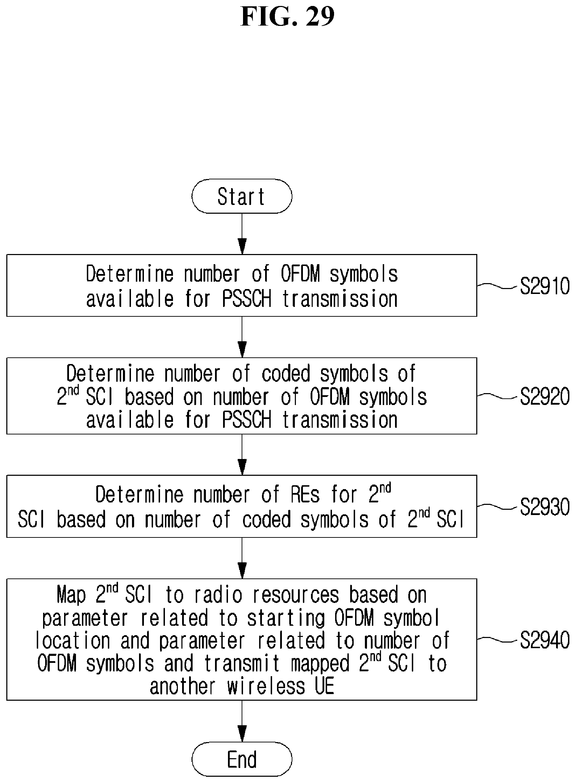

FIG. 29 is a flowchart illustrating an operation of a wireless UE in the sidelink unlicensed band, applicable to the present disclosure.

Referring to FIG. 29, the wireless UE may determine the number of OFDM symbols available for PSSCH transmission (S2910), and based on this, may determine the number of coded symbols of 2nd SCI (S2920). Also, the wireless UE may determine the number of REs of the 2nd SCI based on the number of coded symbols of the 2nd SCI (S2930), and may map the 2nd SCI to radio resources based on a parameter related to a starting OFDM symbol location and a parameter related to the number of OFDM symbols and may transmit the mapped 2nd SCI to another wireless UE (S2940). Here, for example, the number of OFDM symbols available for the PSSCH transmission may be determined as a value acquired by excluding a gap symbol from a sidelink length symbol (SL-lengthSymbols) value. For example, the sidelink length symbol value may be determined based on at least one of a higher layer parameter and SCI signaling. Also, the gap symbol may be determined based on at least one of the higher layer parameter and the SCI signaling.

Also, for example, the gap symbol may be implicitly determined based on the number of OFDM symbols and the starting OFDM symbol location determined based on an LBT success point in time of the wireless UE. Also, the number of coded symbols of the 2nd SCI may be determined by further reflecting the number of PSFCH symbols to the number of OFDM symbols available for the PSSCH transmission. As another example, the number of PSFCH symbols may be determined as a specific value based on a PSFCH overhead indication field within SCI. If the PSFCH overhead indication field within the SCI indicates presence of a PSFCH, the number of PSFCH symbols may be determined as a first value, and if the PSFCH overhead indication field within the SCI indicates absence of the PSFCH, the number of PSFCH symbols may be determined as 0. Also, as described above, the number of resource elements of the 2nd SCI may be determined based on the number of subcarriers related to the PSSCH transmission and the number of subcarriers on an OFDM symbol to which PSCCH DMRS related to the PSCCH and the PSSCH are assigned.

Also, for example, when an SL-SSB is multiplexed in the PSSCH/PSCCH based on the sidelink unlicensed band, the number of resource elements of the 2nd SCI may be determined further based on the number of SL-SSB resource elements.

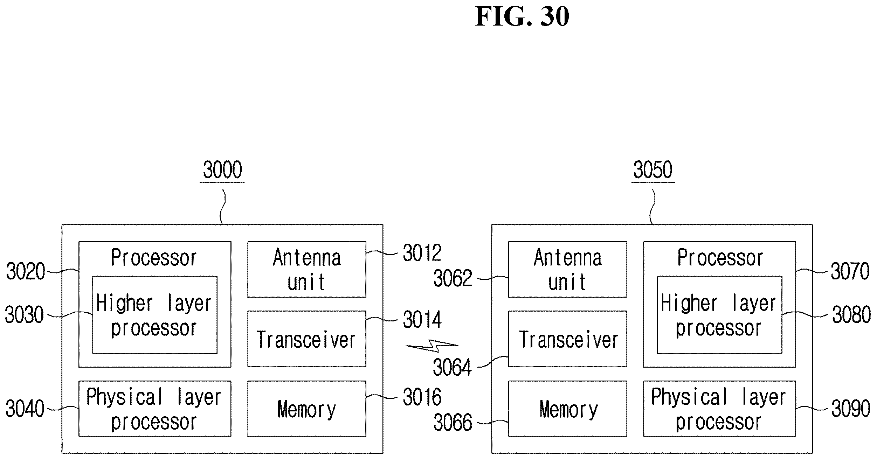

FIG. 30 illustrates a device configuration to which the present disclosure may apply.

Referring to FIG. 3, a first device 3000 and a second device 305 may perform communication with each other. Here, for example, the first device 3000 may be a base station device, and the second device 3050 may be a terminal device. As another example, both the first device 3000 and the second device 3050 may be terminal devices. That is, the first device 3000 and the second device 3050 may be devices that perform communication with each other based on NR-based communication.

For example, a case in which the first device 3000 is the base station device, and the second device 3050 is the terminal device may be considered. Here, the base station device 3000 may include a processor 3020, an antenna unit 3012, a transceiver 3014, and a memory 3016. The processor 3020 may perform baseband-related signal processing, and may include a higher layer processor 3030 and a physical layer processor 3040. The higher layer processor 3030 may process the operation of a medium access control (MAC) layer, a radio resource control (RRC) layer, or a higher layer thereof. The physical layer processor 3040 may process the operation of the physical (PHY) layer (e.g., uplink received signal processing, downlink transmission signal processing). The processor 3020 may also control the overall operation of the base station device 3000 in addition to performing baseband-related signal processing. The antenna unit 3012 may include at least one physical antenna, and may support multiple input multiple output (MIMO) transmission and reception in the case of including a plurality of antennas. Also, the antenna unit 3012 may support beamforming. The memory 3016 may store computationally processed information of the processor 3020, and software, operating systems, applications, and the like related to the operation of the base station device 3000, and may also include components, such as a buffer. The processor 3020 of the base station device 3000 may be configured to implement the operation of the base station in the example embodiments described herein.

The terminal device 3050 may include a processor 3070, an antenna unit 3062, a transceiver 3064, and a memory 3066. For example, herein, the terminal device 3050 may perform communication with the base station device 3000. As another example, herein, the terminal device 3050 may perform sidelink communication with another terminal device. That is, the terminal device 3050 of the present invention refers to a device capable of communicating with at least one of the base station device 3000 and the other terminal device, and is not limited to communication with a specific device. The processor 3070 may perform baseband-related signal processing, and may include a higher layer processor 3080 and a physical layer processor 3090. The higher layer processor 3080 may process the operation of the MAC layer, the RRC layer, or the higher layer. The physical layer processor 3090 may process the operation of the PHY layer (e.g., downlink received signal processing, uplink transmission signal processing, sidelink signal processing). Also, in addition to performing baseband-related signal processing, the processor 3070 may also control the overall operation of the terminal device 3050. The antenna unit 3062 may include at least one physical antenna, and may support MIMO transmission and reception in the case of including a plurality of antennas. Also, the antenna unit 3062 may support beamforming. The memory 3066 may store computationally processed information of the processor 3070, and software, operating systems, applications, and the like related to the operation of the terminal device 3050, and may also include components, such as a buffer. The terminal device 3050 according to an example of the present invention may be associated with a vehicle. For example, the terminal device 3050 may be integrated in the vehicle, may be located in the vehicle, or may be located on the vehicle. Also, the terminal device 3050 according to the present invention may be the vehicle itself. Also, the terminal device 3050 according to the present disclosure may be at least one of a wearable terminal, AR/VR, an Internet of things (IoT) terminal, a robot terminal, and a public safety terminal. The terminal device 3050 to which the present disclosure may apply may include various types of communication devices that support an interactive service using sidelink, for services, for example, Internet access, service execution, navigation, real-time information, autonomous driving, and safety-and-risk diagnosis. Also, the terminal device 3050 may include an AR/VR device capable of performing a sidelink operation or any type of communication devices capable of performing a relay operation as a sensor.

Here, the vehicle/UE to which the present disclosure applies may include an autonomous vehicle/driving UE, a semi-autonomous vehicle/driving UE, and a non-autonomous vehicle/driving UE. Meanwhile, although the terminal device 3050 according to an example of the present invention is described in association with the vehicle, at least one of the UEs may not be associated with the vehicle. It is provided as an example only and should not be interpreted to limit application of the present invention. Also, the terminal device 3050 according to an example of the present disclosure may include various types of communication devices capable of performing cooperation that supports an interactive service using sidelink. That is, the terminal device 3050 may directly support the interactive service using the sidelink and may be employed as a cooperation device for supporting the interactive service using the sidelink.

The terminal device 3050 may determine the number of OFDM symbols available for PSSCH transmission, and based on this, may determine the number of coded symbols of 2nd SCI. Also, the terminal device 3050 may determine the number of REs of the 2nd SCI based on the number of coded symbols of the 2nd SCI, and may map the 2nd SCI to radio resources based on a parameter related to a starting OFDM symbol location and a parameter related to the number of OFDM symbols and transmitting the mapped 2nd SCI to another wireless UE. Here, for example, the number of OFDM symbols available for the PSSCH transmission may be determined as a value acquired by excluding a gap symbol from a sidelink length symbol (SL-lengthSymbols) value. For example, the sidelink length symbol value may be determined based on at least one of a higher layer parameter and SCI signaling. Also, the gap symbol may be determined based on at least one of the higher layer parameter and the SCI signaling. Also, for example, the gap symbol may be implicitly determined based on the number of OFDM symbols and the starting OFDM symbol location determined based on an LBT success point in time of the wireless UE. Also, the number of coded symbols of the 2nd SCI may be determined by further reflecting the number of PSFCH symbols to the number of OFDM symbols available for the PSSCH transmission. As another example, the number of PSFCH symbols may be determined as a specific value based on a PSFCH overhead indication field within SCI. If the PSFCH overhead indication field within the SCI indicates presence of a PSFCH, the number of PSFCH symbols may be determined as a first value, and if the PSFCH overhead indication field within the SCI indicates absence of the PSFCH, the number of PSFCH symbols may be determined as 0. Also, as described above, the number of resource elements of the 2nd SCI may be determined based on the number of subcarriers related to the PSSCH transmission and the number of subcarriers on an OFDM symbol to which PSCCH DMRS related to the PSCCH and the PSSCH are assigned. Also, for example, when an SL-SSB is multiplexed in the PSSCH/PSCCH based on the sidelink unlicensed band, the number of resource elements of the 2nd SCI may be determined further based on the number of SL-SSB resource elements.

Also, various embodiments of the present disclosure may be implemented by hardware, firmware, software, or combination thereof. In the case of implementation by hardware, the embodiments may be implemented by one or more application specific integrated circuits (ASICs), digital signal processors (DSPs), digital signal processing devices (DSPDs), programmable logic devices (PLDs), field programmable gate arrays (FPGAs), general processors, controllers, microcontrollers, microprocessors, etc.

The scope of the present disclosure includes software or machine executable instructions (for example, operating system, application, firmware, program, etc.) for enabling to implement operations according to the methods of the various embodiments, and a device or a non-transitory computer-readable medium executable on a computer storing such a software or instructions.

Various embodiments of the present disclosure are to explain representative aspect of the present disclosure rather than listing all possible combinations and description made in the various embodiments may be independently applied or may be applied in combination of two or more.

EXPLANATION OF SYMBOLS

The above matters may apply to other systems.

**Claims**

1. A wireless user equipment, UE, that operates in a sidelink unlicensed band in a wireless communication system, the wireless UE comprising:

   at least one antenna configured to transmit and receive one or more wireless signals;

at least one processor; and
a memory configured to store instructions for the wireless UE when executed by the at least one processor, wherein the operation of the wireless UE comprises:

determining the number of orthogonal frequency division multiplexing, OFDM, symbols available for physical sidelink shared channel, PSSCH, transmission;
determining the number of coded symbols of 2nd sidelink control information, SCI, based on the number of OFDM symbols available for the PSSCH transmission;
determining the number of resource elements (REs) of the 2nd SCI based on the number of coded symbols of the 2nd SCI; and
mapping the 2nd SCI to radio resources based on a parameter related to a starting OFDM symbol location and a parameter related to the number of OFDM symbols and transmitting the mapped 2nd SCI to another wireless UE.

2. The wireless UE of claim 1, wherein

the number of OFDM symbols available for the PSSCH transmission is determined as a value acquired by excluding a gap symbol from a sidelink length symbol (SL-lengthSymbols) value, and
the sidelink length symbol value is determined based on at least one of a higher layer parameter and SCI signaling.

3. The wireless UE of claim 2, wherein the gap symbol is determined based on at least one of the higher layer parameter and the SCI signaling.

4. The wireless UE of claim 2, wherein the gap symbol is implicitly determined based on the number of OFDM symbols and the starting OFDM symbol location determined based on a listen to talk, LBT, success point in time of the wireless UE.

5. The wireless UE of claim 1, wherein the number of coded symbols of the 2nd SCI is determined by further reflecting the number of physical sidelink feedback channel, PSFCH, symbols to the number of OFDM symbols available for the PSSCH transmission.

6. The wireless UE of claim 5, wherein the number of PSFCH symbols is determined as a specific value based on a PSFCH overhead indication field within the SCI,

if the PSFCH overhead indication field within the SCI indicates presence of a PSFCH, the number of PSFCH symbols is determined as a first value, and
if the PSFCH overhead indication field within the SCI indicates absence of the PSFCH, the number of PSFCH symbols is determined as 0.

7. The wireless UE of claim 1, wherein the number of resource elements of the 2nd SCI is determined based on the number of subcarriers related to the PSSCH transmission and the number of subcarriers on an OFDM symbol to which PSCCH demodulation reference signals, DMRS, related to a physical sidelink control channel, PSCCH, and the PSSCH are assigned.

8. The wireless UE of claim 7, wherein, when a sidelink-synchronization signal block, SL-SSB, is multiplexed in the PSSCH/PSCCH based on the sidelink unlicensed band, the number of resource elements of the 2nd SCI is determined further based on the number of SL-SSB resource elements.

# FIG. 1

Downlink frame *i*

Uplink frame *i*

$N_{TA} T_s$

# FIG. 2

One sub frame

$N_{sub\ frame}^{symbols,\mu}$ OFDM symbols

$k = N_{RB}^{\mu} N_{sc}^{RB} - 1$

$N_{RB}^{\mu} N_{sc}^{RB}$ subcarriers

$N_{sc}^{RB}$ subcarriers

Resource block

Resource element
-$(k,\bar{l})$in resource grid
-$(k,l)$in resource block

$k = 0$

$l = 0$

$\bar{l} = 14 \cdot 2^{\mu} - 1$

# FIG. 3

**FIG. 4**

| | | | | | C-V2X | |
|---|---|---|---|---|---|---|
| V2V | Reserved | Reserved | Tolling | Control | I2V | PVD/ Security |
| CH 1 | CH 2 | CH 3 | CH 4 | CH 5 | CH 6 | CH 7 |

5,855    5,865    5,875    5,885    5,895    5,905    5,915    5,925 MHz

EP 4 611 286 A1

# FIG. 5

sl-TimeResource(length = $L_{bitmap}$)
(e.g.,0011111100)

Frequency(RBs)

sl-RB-Number

sl-StartRBsubchannel

Time(slots)

10240 x $2^{\mu}$

sl-SubchannelSize

SL BWP

Excluded RB

Reserved slot

Excluded slot

SSB slot

EP 4 611 286 A1

# FIG. 6

EP 4 611 286 A1

**FIG. 7**

| U-NII-1 (100 MHz) | U-NII-2A (100 MHz) | U-NII-2B (120 MHz) | U-NII-2C (255 MHz) | U-NII-3 (100 MHz) / Part 15.247 Rules (125 MHz) | 25 MHz | U-NII-4 (75 MHz) |

5.150 GHz    5.250 GHz    5.350 GHz    5.470 GHz      5.725 GHz    5.850 GHz   5.925 GHz

# FIG. 8

# FIG. 9

$$RB_{s,x}^{start,\mu} = N_{grid,x}^{start,\mu} + \begin{cases} 0 & s = 0 \\ GB_{s-1,x}^{start,\mu} + GB_{s-1,x}^{size,\mu} & otherwise \end{cases}$$

$$RB_{s,x}^{end,\mu} = N_{grid,x}^{start,\mu} + \begin{cases} N_{grid,x}^{size,\mu} & s = N_{RB-set,x}-1 \\ GB_{s,x}^{start,\mu} & otherwise \end{cases}$$

$$N_{BWP,i}^{size,\mu} = RB_{s1,uplink}^{end,\mu} - RB_{s0,uplink}^{start,\mu}$$

$$N_{BWP,i}^{start,\mu} = RB_{s0,uplink}^{start,\mu}$$

EP 4 611 286 A1

# FIG. 10

Point A

BWP

1010 — | 0 | 1 | 2 | 3 | 4 | 0 | – – – – – – – | 2 | 3 | 4 | 0 | – – – – – – – – – – | 1 | 2 | 3 | 4 |

# FIG. 11

S1110

Wait until idle for
$T_d = 16 + m \cdot 9\mu s$

S1120

Initialize backoff
counter $N \in \{0, CW\}$

S1130

$N = 0?$ — Y → Transmit

N

S1140

Decrement counter N

S1150

Channel idle
for 9μs?

Y

N

S1160

Wait until idle for
$T_d = 16 + m \cdot 9\mu s$

**FIG. 12**

FIG. 13

EP 4 611 286 A1

OFDM symbol

Cyclic extension

Uplink

$C_2 T_{symb} - T_{TA} - 16\ \mu s$

$T_{TA}$

Downlink

At device

Uplink

16 µs gap

Downlink

At gNB

**FIG. 14**

# FIG. 15

CCA

UUT
CCA

CCA

UUT
Transmissions

Fixed Frame Period

Channel Occupancy Time

Idle period

**FIG. 16**

EP 4 611 286 A1

**FIG. 17**

SL-U Resrouce Pool —1710

LBT BW(RBS) —1720

Sub-CH index#0 • • •

**FIG. 18**

# FIG. 19

# FIG. 20

# FIG. 21

COT Duration

Slot n | Slot n+1

Gap | SCI-2 | SCI-1 | 13 | 0 | SCI-2 | SCI-1 | Gap

2110 | 2120

Rate Matching around gap symbols

# FIG. 22

# FIG. 23

PSFCH Tx on a SL non-slot

Slot n | Slot n+1

LBT success

2310

SL Starting OFDM symbols

2320 Detected PSCCH

2330 PSCCH occasion

# FIG. 24

# FIG. 25

**FIG. 26**

2610

Candidate AS-SSBs
overlapped in a RP

2620

# FIG. 27

2710

Slot n

DMRS

AGC

DMRS

2nd SCI

PSSCH

PSCCH

PSSCH

DMRS

Clear LBT

Start OFDM symbols after LBT

# FIG. 28

# FIG. 29

```
                    ┌─────────┐
                    │  Start  │
                    └─────────┘
                         │
                         ▼
    ┌──────────────────────────────────────────┐
    │     Determine number of OFDM symbols      │────  S2910
    │      available for PSSCH transmission      │
    └──────────────────────────────────────────┘
                         │
                         ▼
    ┌──────────────────────────────────────────┐
    │      Determine number of coded symbols of  │
    │   2nd SCI based on number of OFDM symbols  │────  S2920
    │      available for PSSCH transmission       │
    └──────────────────────────────────────────┘
                         │
                         ▼
    ┌──────────────────────────────────────────┐
    │      Determine number of REs for 2nd       │
    │  SCI based on number of coded symbols of 2nd SCI │────  S2930
    └──────────────────────────────────────────┘
                         │
                         ▼
    ┌──────────────────────────────────────────┐
    │      Map 2nd SCI to radio resources based on │
    │   parameter related to starting OFDM symbol │
    │   location and parameter related to number of │────  S2940
    │   OFDM symbols and transmit mapped 2nd SCI to │
    │            another wireless UE              │
    └──────────────────────────────────────────┘
                         │
                         ▼
                    ┌─────────┐
                    │   End   │
                    └─────────┘
```

**FIG. 30**

EP 4 611 286 A1

## INTERNATIONAL SEARCH REPORT

| International application No. |
|---|
| **PCT/KR2023/017002** |

### A. CLASSIFICATION OF SUBJECT MATTER

**H04L 1/00**(2006.01)i; **H04L 5/00**(2006.01)i; **H04W 74/08**(2009.01)i; **H04W 4/40**(2018.01)i

According to International Patent Classification (IPC) or to both national classification and IPC

### B. FIELDS SEARCHED

Minimum documentation searched (classification system followed by classification symbols)

H04L 1/00(2006.01); H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 사이드링크(sidelink), PSSCH(physical sidelink shared channel), 2nd SCI(second sidelink control information), 심볼(symbol), 자원 요소(resource element, RE), 레이트 매칭(rate matching), 시작(start), 길이 (length)

### C. DOCUMENTS CONSIDERED TO BE RELEVANT

| Category* | Citation of document, with indication, where appropriate, of the relevant passages | Relevant to claim No. |
|---|---|---|
| Y | MODERATOR (SAMSUNG). Text Proposal for PSCCH and 2nd SCI related issue including their RS. R1-2007160, 3GPP TSG RAN WG1 Meeting #102-e, e-Meeting. 28 August 2020.<br>    See pages 1-3. | 1-8 |
| Y | LG ELECTRONICS. Discussion on essential corrections in physical layer structure. R1-2005740, 3GPP TSG RAN WG1 Meeting #102-e, e-Meeting. 08 August 2020.<br>    See section 2.1; and figure 1. | 1-8 |
| Y | APPLE. On Remaining Issues of Sidelink Physical Layer Structure. R1-2006484, 3GPP TSG RAN WG1 Meeting #102-e, e-Meeting. 08 August 2020.<br>    See section 2.1. | 2-4 |
| Y | 3GPP; TSG RAN; NR; Physical channels and modulation (Release 17). 3GPP TS 38.211 V17.3.0. 21 September 2022.<br>    See sections 8.4.3.1-8.4.3.1.3; and table 8.4.3.1-1. | 8 |
| A | WO 2021-112579 A1 (LG ELECTRONICS INC.) 10 June 2021 (2021-06-10)<br>    See paragraphs [0304]-[0345]. | 1-8 |

☐ Further documents are listed in the continuation of Box C.    ☑ See patent family annex.

| | | |
|---|---|---|
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **05 February 2024** | **05 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

EP 4 611 286 A1

INTERNATIONAL SEARCH REPORT
Information on patent family members

International application No.

PCT/KR2023/017002

| Patent document cited in search report | Publication date (day/month/year) | Patent family member(s) | | Publication date (day/month/year) |
|---|---|---|---|---|
| WO 2021-112579 A1 | 10 June 2021 | CN 114930762 | A | 19 August 2022 |
| | | CN 114930762 | B | 28 November 2023 |
| | | EP 4060922 | A1 | 21 September 2022 |
| | | KR 10-2022-0107200 | A | 02 August 2022 |
| | | US 2023-0046738 | A1 | 16 February 2023 |

Form PCT/ISA/210 (patent family annex) (July 2022)

62